# EUROPEAN PATENT APPLICATION

(11) **EP 4 836 182 A1**
(43) Date of publication of application: **04.11.2026**
(21) Application number: 24915060.8
(22) Date of filing: 04.12.2024
(51) Int. Cl.: H01M 50/597

(54) **BATTERY CELL, BATTERY, ELECTRIC APPARATUS, AND BATTERY PROCESSING DEVICE AND METHOD**

(30) Priority: 02.01.2024 CN 202410010963
(71) Applicant: Contemporary Amperex Technology Co., Limited, Ningde, Fujian 352100 (CN)
(72) Inventor: LUO, Zhongping, Ningde, Fujian 352100 (CN); XIE, Ming, Ningde, Fujian 352100 (CN); LIN, Wenfa, Ningde, Fujian 352100 (CN); TANG, Minghao, Ningde, Fujian 352100 (CN); ZHANG, Shengwu, Ningde, Fujian 352100 (CN)
(74) Representative: Gong, Jinping
(86) International application number: PCT/CN2024/136745
(87) International publication number: WO 2025/145844

(57) **Abstract**

The present application is applicable to the technical field of batteries (100), and provides a battery cell (10), a battery (100), an electric apparatus, and a device (2000) and method for processing a battery (100). The battery cell (10) includes an electrode assembly (11). The electrode assembly (11) includes a positive electrode sheet (111), a negative electrode sheet (112), and a separator (113). The positive electrode sheet (111), the negative electrode sheet (112) and the separator (113) are stacked or wound. Some portions of the separator (113) protrude beyond an edge of the positive electrode sheet (111) and an edge of the negative electrode sheet (112) to form edge sealing portions (1131); and some of the edge sealing portions (1131) are fixedly connected. In this way, the separator (113) can stably and reliably wrap the positive electrode sheet (111) and the negative electrode sheet (112), alleviating the problem of overlapping of the positive electrode sheet (111) and the negative electrode sheet (112) caused by folding of the separator (113), thereby improving the reliability of the battery cell (10).

## Description

### CROSS-REFERENCE TO RELATED APPLICATIONS

The present application claims priority to the Chinese Patent Application No. 202410010963.3, filed with the China National Intellectual Property Administration on January 2, 2024 and entitled "BATTERY CELL, BATTERY, ELECTRIC APPARATUS, AND DEVICE AND METHOD FOR PROCESSING BATTERY", which is incorporated herein by reference in its entirety.

### TECHNICAL FIELD

The present application relates to the technical field of batteries, and specifically relates to a battery cell, a battery, an electric apparatus, and a device and method for processing a battery.

### BACKGROUND

In the related art, a battery cell may generally include a housing and an electrode assembly at least partially disposed within the housing. The electrode assembly is mainly formed by stacking or winding a positive electrode sheet and a negative electrode sheet, with a separator provided between the positive electrode sheet and the negative electrode sheet.

In some cases, the separator has a risk of folding, and after being folded, the separator may fail to wrap the electrode sheets, leading to overlapping of the positive electrode sheet and the negative electrode sheet and thus causing self-discharge of the electrode assembly.

### SUMMARY

In view of the above problems, embodiments of the present application are intended to provide a battery cell, a battery, an electric apparatus, and a device and method for processing a battery, which can alleviate the technical problem of overlapping of the positive electrode sheet and the negative electrode sheet caused by folding of the separator.

The embodiments of the present application adopt the following technical solutions.

According to a first aspect, an embodiment of the present application provides a battery cell, including an electrode assembly. The electrode assembly includes a positive electrode sheet, a negative electrode sheet, and a separator. The positive electrode sheet, the negative electrode sheet, and the separator are stacked or wound. Some portions of the separator protrude beyond an edge of the positive electrode sheet and an edge of the negative electrode sheet to form edge sealing portions, and at least some of the edge sealing portions are fixedly connected.

In the battery cell provided by this embodiment of the present application, at least some portions of the separator protrude beyond an edge of the positive electrode sheet and an edge of the negative electrode sheet to form the edge sealing portions, and at least some of the edge sealing portions are fixedly connected, so that at least some portions of the separator are fixedly connected beyond the edges of the positive electrode sheet and the negative electrode sheet, thereby allowing the positions of at least some portions of the separator to be fixed to some extent. In this way, the separator can stably and reliably wrap the positive electrode sheet and the negative electrode sheet to achieve insulation between the positive electrode sheet and the negative electrode sheet, alleviating the problem of overlapping of the positive electrode sheet and the negative electrode sheet caused by folding of the separator, thereby improving the reliability of the battery cell.

In some embodiments, the edge sealing portions located beyond the edges at the same end of the positive electrode sheet and the negative electrode sheet are fixedly connected.

In this way, the edge sealing portions at each end can wrap the positive electrode sheet and the negative electrode sheet at the corresponding end, so that the separator can stably achieve insulation between the positive electrode sheet and the negative electrode sheet, thereby alleviating the problem of overlapping of the positive electrode sheet and the negative electrode sheet at the corresponding end.

In some embodiments, the edge sealing portions located beyond the edges at the same end of the positive electrode sheet and the negative electrode sheet are fixedly connected to form fixed regions, and the fixed regions are spaced apart or arranged continuously.

Such arrangement allows for highly flexible fixing operation of the edge sealing portion.

In addition, the fixed regions beyond the edges at the same end of the positive electrode sheet and the negative electrode sheet are spaced apart, so that an electrolyte can infiltrate from the edge sealing portions toward a middle position of the electrode assembly, thereby improving the infiltration efficiency of the electrode assembly.

In some embodiments, a positive electrode tab and a negative electrode tab are spaced apart at one end of the electrode assembly along a first direction, or a positive electrode tab and a negative electrode tab are respectively arranged at two opposite ends of the electrode assembly along a first direction. The positive electrode tab is connected to the positive electrode sheet, the negative electrode tab is connected to the negative electrode sheet, and the edge sealing portions are provided beyond at least one end of the positive electrode sheet and the negative electrode sheet along the first direction.

Such arrangement allows the edge sealing portions beyond at least one end of the positive electrode sheet and the negative electrode sheet along the first direction to be fixedly connected, so that the separator can wrap the positive electrode sheet and the negative electrode sheet on at least one end of the electrode assembly along the first direction, thereby alleviating the problem of overlapping of the positive electrode sheet and the negative electrode sheet on at least one end in the first direction.

In some embodiments, the edge sealing portions are provided beyond both two opposite ends of the positive electrode sheet and the negative electrode sheet along the first direction, and the edge sealing portions located beyond each of the ends of the positive electrode sheet and the negative electrode sheet along the first direction are fixedly connected.

In this way, the problem of overlapping of the positive electrode sheet and the negative electrode sheet at the two opposite ends in the first direction can be alleviated.

In some embodiments, the positive electrode tab and the negative electrode tab are spaced apart at one end of the electrode assembly along the first direction, and the edge sealing portions are provided beyond an end of the positive electrode sheet and an end of the negative electrode sheet having the positive electrode tab and the negative electrode tab. The edge sealing portions beyond the end of the positive electrode sheet and the end of the negative electrode sheet having the positive electrode tab and the negative electrode tab are fixedly connected and fixed to the positive electrode tab and/or the negative electrode tab.

Such arrangement can alleviate the problem that the positive electrode tab overlaps with the negative electrode sheet after bending, and/or alleviate the problem that the negative electrode tab overlaps with the positive electrode sheet after bending.

In some embodiments, the positive electrode tab and the negative electrode tab are respectively arranged at the two opposite ends of the electrode assembly along the first direction, and the edge sealing portions are provided beyond both the two opposite ends of the positive electrode sheet and the negative electrode sheet along the first direction; and
the edge sealing portions beyond the end of the positive electrode sheet and the end of the negative electrode sheet having the positive electrode tab are fixedly connected and fixed to the positive electrode tab; and/or the edge sealing portions beyond the end of the positive electrode sheet and the end of the negative electrode sheet having the negative electrode tab are fixedly connected and fixed to the negative electrode tab.

Such arrangement, on one hand, can alleviate the problem of self-discharge of the electrode assembly caused by overlapping of the positive electrode tab and the negative electrode sheet, and/or alleviate the problem of self-discharge of the electrode assembly caused by overlapping of the negative electrode tab and the positive electrode sheet. On the other hand, such arrangement helps to increase the infiltration speed and infiltration amount of the electrolyte, thereby improving the electrolyte infiltration of the battery cell and the cycling performance of the battery cell.

In some embodiments, the positive electrode sheet, the negative electrode sheet, and the separator are stacked along a second direction, and the edge sealing portions are provided beyond at least one end of the positive electrode sheet and the negative electrode sheet along a third direction, where the first direction, the second direction, and the third direction intersect with each other.

Such arrangement allows the edge sealing portions beyond at least one end of the positive electrode sheet and the negative electrode sheet along the third direction to be fixedly connected, so that the separator can wrap the positive electrode sheet and the negative electrode sheet on at least one end of the electrode assembly along the third direction, thereby alleviating the problem of overlapping of the positive electrode sheet and the negative electrode sheet on the at least one end in the third direction.

In some embodiments, the edge sealing portions are provided beyond both the two opposite ends of the positive electrode sheet and the negative electrode sheet along the third direction, and the edge sealing portions located beyond each of the ends of the positive electrode sheet and the negative electrode sheet along the third direction are fixedly connected.

In this way, the problem of overlapping of the positive electrode sheet and the negative electrode sheet at the two opposite ends in the third direction can be alleviated.

In some embodiments, the edge sealing portions are fixed through heat sealing; or
the separator is provided with an adhesive layer at each edge sealing portion, and the edge sealing portions are fixedly connected through the adhesive layers.

Such arrangement provides more ways to fixedly connect the edge sealing portions, with high flexibility.

According to a second aspect, an embodiment of the present application provides a battery including the battery cell.

The battery provided by this embodiment of the present application, by adopting the battery cell described above, can alleviate the problem of overlapping of the positive electrode sheet and the negative electrode sheet caused by folding of the separator, so that the reliability of the battery cell is improved, and thus the reliability of the battery is improved.

According to a third aspect, an embodiment of the present application provides an electric apparatus including a battery cell or a battery.

The electric apparatus provided by this embodiment of the present application, by adopting the battery cell or the battery described above, can improve the reliability of the battery cell, so that the reliability of the battery is improved, and thus the reliability of the electric apparatus is improved.

According to a fourth aspect, an embodiment of the present application provides a device for processing a battery, applied to a battery cell and including:
an edge sealing apparatus for fixedly connecting at least some of edge sealing portions of a separator protruding beyond an edge of the positive electrode sheet and an edge of the negative electrode sheet.

The device for processing a battery provided by this embodiment of the present application is provided with the edge sealing apparatus, so that at least some of the edge sealing portions of the separator protruding beyond an edge of the positive electrode sheet and an edge of the negative electrode sheet are fixedly connected, and thus at least some portions of the separator are fixedly connected beyond an edge of the positive electrode sheet and an edge of the negative electrode sheet, thereby allowing the positions of the at least some portions of the separator to be fixed to some extent. In this way, the separator can stably and reliably wrap the positive electrode sheet and the negative electrode sheet to isolate the positive electrode sheet from the negative electrode sheet and achieve insulation between the positive electrode sheet and the negative electrode sheet, alleviating the problem of overlapping of the positive electrode sheet and the negative electrode sheet caused by folding of the separator, thereby improving the reliability of the battery cell.

In some embodiments, the edge sealing apparatus includes:
a connecting member; and
a heating member provided on the connecting member and configured to heat the edge sealing portions to fix the edge sealing portions.

Such arrangement can achieve heat-sealing fixation of the edge sealing portion.

In some embodiments, the edge sealing apparatus includes one heating member, or the edge sealing apparatus includes multiple heating members, where the multiple heating members are spaced apart on one side of the connecting member.

Such arrangement allows the fixed regions formed by fixing the edge sealing portions at the same end of the electrode assembly to be arranged continuously or spaced apart.

In some embodiments, the device for processing a battery further includes:
an assembly apparatus for assembling the electrode assembly into the battery cell; and
a stacking apparatus for stacking multiple battery cells to form a battery.

With such arrangement, a battery can be obtained.

According to a fifth aspect, an embodiment of the present application provides a method for processing a battery, applied to a battery cell and including:
fixedly connecting at least some of edge sealing portions of a separator protruding beyond an edge of a positive electrode sheet and an edge of a negative electrode sheet.

In the method for processing a battery provided by this embodiment of the present application, at least some of the edge sealing portions of the separator protruding beyond an edge of the positive electrode sheet and an edge of the negative electrode sheet are fixed, so that at least some portions of the separator are fixedly connected beyond an edge of the positive electrode sheet and an edge of the negative electrode sheet, thereby allowing the positions of at least some portions of the separator to be fixed to some extent. In this way, the separator can stably and reliably wrap the positive electrode sheet and the negative electrode sheet to isolate the positive electrode sheet from the negative electrode sheet and achieve insulation between the positive electrode sheet and the negative electrode sheet, alleviating the problem of overlapping of the positive electrode sheet and the negative electrode sheet caused by folding of the separator, thereby improving the reliability of the battery cell.

In some embodiments, the fixedly connecting at least some of the edge sealing portions of the separator protruding beyond an edge of the positive electrode sheet and an edge of the negative electrode sheet includes:
fixedly connecting the edge sealing portions of the separator located beyond the edges at the same end of the positive electrode sheet and the negative electrode sheet.

In this way, the edge sealing portions at each end can wrap the positive electrode sheet and the negative electrode sheet at the corresponding end, so that the separator can stably achieve insulation between the positive electrode sheet and the negative electrode sheet, thereby alleviating the problem of overlapping of the positive electrode sheet and the negative electrode sheet at the corresponding end.

In some embodiments, the fixedly connecting the edge sealing portions of the separator located beyond the edges at the same end of the positive electrode sheet and the negative electrode sheet includes:
pressing an edge sealing apparatus onto the edge sealing portions of the separator protruding beyond the edges at the same end of the positive electrode sheet and the negative electrode sheet; and
heating the edge sealing portions by the edge sealing apparatus.

By adopting the above technical solution, the edge sealing portions are fixed through heat sealing.

In some embodiments, before the fixedly connecting at least some of the edge sealing portions of the separator protruding beyond an edge of the positive electrode sheet and an edge of the negative electrode sheet, the method includes:
stacking or winding the positive electrode sheet, the negative electrode sheet, and the separator.

With such arrangement, the edge sealing portions are fixedly connected before the positive electrode sheet, the negative electrode sheet, and the separator can be stacked or wound to form the electrode assembly.

The above description is only an overview of the technical solutions of the present application. In order to more clearly understand the technical means of the present application so that they can be implemented according to the content of the specification, and in order to make the above and other purposes, features and advantages of the present application more obvious and easier to understand, specific embodiments of the present application are listed below.

### BRIEF DESCRIPTION OF DRAWINGS

In order to more clearly illustrate the technical solutions in the embodiments of the present application, the drawings required for the embodiments or exemplary technical descriptions are briefly introduced below. Obviously, the drawings in the following description are only some embodiments of the present application. For those of ordinary skill in the art, other drawings can be obtained based on these drawings without creative efforts.
FIG. 1 is a schematic diagram of a vehicle according to some embodiments of the present application;
FIG. 2 is a schematic exploded view of a battery according to some embodiments of the present application;
FIG. 3 is a schematic exploded view of a battery cell according to some embodiments of the present application;
FIG. 4 is a schematic diagram of a partially unfolded electrode assembly of the battery cell provided in FIG. 3 of the present application;
FIG. 5 is a schematic diagram of a battery cell according to some other embodiments of the present application;
FIG. 6 is a schematic diagram of an electrode assembly of the battery cell provided in FIG. 5;
FIG. 7 is a schematic diagram of an electrode assembly of a battery cell according to still some other embodiments of the present application;
FIG. 8 is a cross-sectional view along A-A in FIG. 6;
FIG. 9 is a schematic diagram of FIG. 8 before edge sealing portions are fixed;
FIG. 10 is a side view of the electrode assembly provided in FIG. 6 according to some embodiments;
FIG. 11 is a side view of the electrode assembly provided in FIG. 6 according to some other embodiments;
FIG. 12 is a cross-sectional view along B-B in FIG. 7;
FIG. 13 is a schematic diagram of a device for processing a battery according to some embodiments of the present application;
FIG. 14 is a schematic diagram of an edge sealing apparatus of a device for processing a battery according to some embodiments of the present application;
FIG. 15 is a schematic diagram of an edge sealing apparatus of a device for processing a battery according to some other embodiments of the present application; and
FIG. 16 is a method flowchart of a method for processing a battery according to some embodiments of the present application.

In the drawings, the reference numerals are:
1000. vehicle; 100. battery; 200. controller; 300. motor; 10. battery cell; 20. box; 201. accommodation space; 21. first portion; 22. second portion; 11. electrode assembly; 111. positive electrode sheet; 112. negative electrode sheet; 113. separator; 1131. edge sealing portion; 1132. main body portion; 114. positive electrode tab; 115. negative electrode tab; 12. housing assembly; 121. housing; 122. end cover; 2000. device for processing a battery; 2100. edge sealing apparatus; 2110. connecting member; 2120. heating member; 2200. assembly apparatus; 2300. stacking apparatus; 2400. winding apparatus; m. fixed region; a. main structure; L. central axis; Z. first direction; Y. second direction; and X. third direction.

### DESCRIPTION OF EMBODIMENTS

The embodiments of the present application are described in detail below, and examples of the embodiments are illustrated in the drawings, where the same or similar reference numerals always indicate the same or similar elements or elements having the same or similar functions. The embodiments described below with reference to the drawings are exemplary and are intended to explain the present application, and cannot be understood as limiting the present application.

Unless otherwise specified, all embodiments and optional embodiments of the present application can be combined with each other to form new technical solutions.

Unless otherwise specified, all technical features and optional technical features of the present application can be combined with each other to form new technical solutions.

In the description of the embodiments of the present application, it should be understood that orientations or positional relationships indicated by the terms "length", "width", "upper", "lower", "front", "rear", "left", "right", "vertical", "horizontal", "top", "bottom", "inner", "outer", and the like are based on orientations or positional relationships shown in the drawings, merely for facilitating the description of the present application and simplifying the description rather than indicating or implying that the apparatus or element referred to must have a specific orientation and be constructed and operated in a specific orientation, and therefore cannot be understood as limiting the present application.

In addition, the terms "first" and "second" are used for descriptive purposes only and cannot be understood as indicating or implying relative importance or implicitly indicating the number of indicated technical features. Thus, features defined with "first" and "second" may explicitly or implicitly include one or more of the features.

In the description of the embodiments of the present application, "multiple" means two or more, and unless otherwise explicitly and specifically defined, "two or more" includes two. Accordingly, "multiple groups" means more than two groups, including two groups.

In the description of the embodiments of the present application, unless otherwise explicitly specified and defined, the terms "mount", "connect", "join", "fix", and the like should be understood in a broad sense, for example, it may be a fixed connection, a detachable connection, or an integral connection; it may be a mechanical connection or an electrical connection; it may be a direct connection or an indirect connection through an intermediate medium; and it may be internal communication between two elements or an interaction relationship between two elements. For those of ordinary skill in the art, the specific meanings of the above terms in the present application can be understood according to specific situations.

In the description of the present application, the terms "and/or" are merely a description of an association relationship of associated objects, indicating that three relationships may exist. For example, A and/or B may indicate the following three cases: only A is present, A and B are both present, and only B is present. In addition, in the present application, the character "/" generally indicates that the contextually associated objects are in an "or" relationship.

In the description of the embodiments of the present application, unless otherwise explicitly specified and defined, the technical terms "adjacent to" and "close to" means being close in position. For example, for three components A1, A2 and B, if a distance between A1 and B is greater than a distance between A2 and B, A2 is closer to B than A1, that is, A2 is adjacent to B, or it may mean that B is adjacent to A2, in other words, A2 is close to B. For another example, in a case where there are multiple components C and the multiple components C are C1, C2 ..., and CN respectively, when one of the components C such as C2 is closer to component B than the other components C, B is adjacent to C2, or it may mean that C2 is adjacent to B, in other words, C2 is close to B.

Although the present application has been described with reference to preferred embodiments, various improvements can be made thereto and components therein can be replaced with equivalents without departing from the scope of the present application. In particular, as long as there is no structural conflict, the technical features mentioned in the various embodiments can be combined in any manner. The present application is not limited to the specific embodiments disclosed herein, but includes all technical solutions falling within the scope of the claims.

A battery cell may generally include a housing and an electrode assembly at least partially disposed within the housing. The electrode assembly is a component in the battery cell where electrochemical reactions take place. The electrode assembly is mainly formed by stacking or winding a positive electrode sheet and a negative electrode sheet, with a separator provided between the positive electrode sheet and the negative electrode sheet. The separator is an insulating structure with insulating properties, and is configured to achieve insulation between the positive electrode sheet and the negative electrode sheet, to alleviate the problem of self-discharge of the electrode assembly caused by overlapping of the positive electrode sheet and the negative electrode sheet.

In some cases, after the positive electrode sheet, the negative electrode sheet, and the separator form the electrode assembly, the separator has a risk of folding. When the separator is folded, there is a risk that the separator fails to wrap the electrode sheets, resulting in self-discharge of the electrode assembly caused by overlapping of the positive electrode sheet and the negative electrode sheet. The electrode sheet mentioned herein may be the positive electrode sheet or the negative electrode sheet.

Based on the above considerations, the embodiments of the present application provide a battery cell, a battery, an electric apparatus, and a device and method for processing a battery. At least some portions of the separator protrude beyond an edge of the positive electrode sheet and an edge of the negative electrode sheet to form edge sealing portions, and at least some of the edge sealing portions are fixedly connected, so that at least some portions of the separator are fixedly connected beyond an edge of the positive electrode sheet and an edge of the negative electrode sheet, thereby allowing the positions of at least some portions of the separator to be fixed to some extent. In this way, the separator can stably and reliably wrap the positive electrode sheet and the negative electrode sheet to achieve insulation between the positive electrode sheet and the negative electrode sheet, alleviating the problem of overlapping of the positive electrode sheet and the negative electrode sheet caused by folding of the separator, thereby improving the reliability of the battery cell.

It should be first noted herein that the device and method for processing a battery refer to a device for processing a battery and a method for processing a battery.

In some embodiments, the battery cell and battery involved in the embodiments of the present application may be used in an electric apparatus using a battery cell or battery as a power source.

The electric apparatus involved in the embodiments of the present application may be, but is not limited to, a mobile phone, a tablet, a laptop, an electric toy, an electric tool, an electric bicycle, a vehicle, a ship, and a spacecraft. The electric toy may include a fixed or mobile electric toy, such as a game console, an electric toy car, an electric toy ship, or an electric toy airplane. The spacecraft may include an airplane, a rocket, a space shuttle, a spaceship, and the like. According to sources of power, vehicles may be classified into fuel vehicles, gas vehicles, new energy vehicles, and the like, where new energy vehicles may be pure electric vehicles, hybrid vehicles, extended-range vehicles, or the like. According to driving modes, vehicles may be classified into front-drive vehicles, rear-drive vehicles, or four-drive vehicles.

In some other embodiments, the battery cell and battery involved in the embodiments of the present application may alternatively be used in energy storage apparatuses. The energy storage apparatuses may be energy storage containers, energy storage electric cabinets, or the like.

The battery involved in the embodiments of the present application may be a single physical module including one or more battery cells to provide higher voltage and capacity. When there are multiple battery cells, the multiple battery cells are connected in series, parallel, or series-parallel through bus components, and being connected in series-parallel refers to a combination of a series connection and a parallel connection of the multiple battery cells.

In some embodiments, the battery may be a battery module. When there are multiple battery cells, the multiple battery cells are arranged and fixed to form a battery module. In an example, the multiple battery cells may be fixed by tie straps or the like to form a battery module. In an example, the multiple battery cells may alternatively be fixed by end plates, side plates, or the like to form a battery module.

In some other embodiments, the battery may be a battery pack. The battery pack may include a box and battery cells. In an example, the battery cells may be directly accommodated in the box. In an example, multiple battery cells may first form a battery module which is then accommodated in the box.

The battery cell involved in the embodiments of the present application refers to the smallest unit for storing and outputting electrical energy. The battery cell may be a secondary battery or a primary battery. The battery cell may be, but is not limited to, a metal battery, a lithium-sulfur battery, a sodium-ion battery, or a magnesium-ion battery. The battery cell may be in the shape of a cylinder, a flat body, a rectangular body, or in other shapes.

For ease of description, an electric apparatus is used as an example for description in the embodiments of the present application.

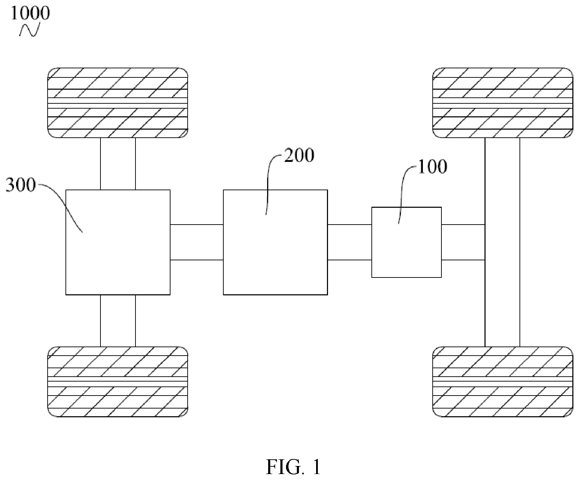

In some embodiments, reference is made to FIG. 1, where FIG. 1 is a schematic diagram of a vehicle 1000 according to some embodiments of the present application. The above battery 100 is provided inside the vehicle 1000, and the battery 100 may be provided at the bottom, front, or rear of the vehicle 1000. The battery 100 may be used for power supply of the vehicle 1000, for example, the battery 100 may serve as an operating power source of the vehicle 1000. The vehicle 1000 may further include a controller 200 and a motor 300, where the controller 200 is configured to control the battery 100 to supply power to the motor 300, for example, for operating power requirements during start, navigation, and driving of the vehicle 1000.

In some embodiments, the battery 100 can not only serve as an operating power source of the vehicle 1000, but also serve as a driving power source of the vehicle 1000, replacing or partially replacing fuel or natural gas to provide driving power for the vehicle 1000.

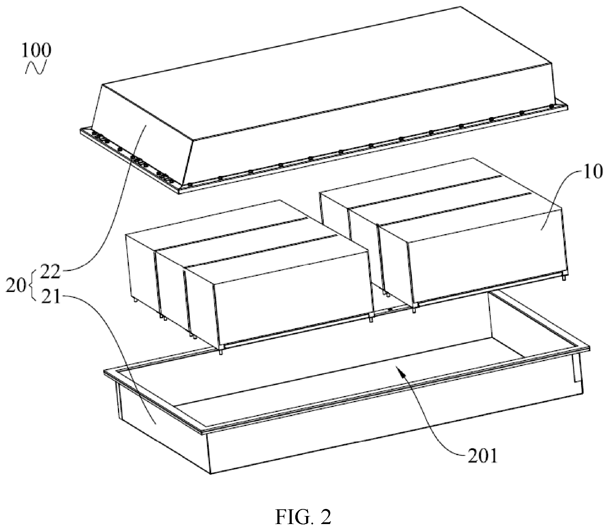

In some embodiments, reference is made to FIG. 2, where FIG. 2 is a schematic exploded view of a battery 100 according to some embodiments of the present application. The battery 100 includes a box 20 and multiple battery cells 10. The box 20 is a structure with an accommodation space 201 inside, and the box 20 can adopt various structures. In some embodiments, the box 20 may include a first portion 21 and a second portion 22, where the first portion 21 and the second portion 22 cover each other to jointly define the above accommodation space 201.

The first portion 21 may be a hollow structure with an opening at one end, and the second portion 22 is a plate-like structure, where the second portion 22 covers the opening side of the first portion 21, so that the first portion 21 and the second portion 22 jointly define the above accommodation space 201. Alternatively, reference is made to FIG. 2, where the first portion 21 and the second portion 22 may be hollow structures with an opening at one end, the opening side of the first portion 21 covers the opening side of the second portion 22, so that the first portion 21 and the second portion 22 jointly define the above accommodation space 201.

The box 20 formed by the first portion 21 and the second portion 22 may be in various shapes, such as in the shape of a cylinder or a rectangular body.

In some embodiments, reference is made to FIG. 2, where multiple battery cells 10 may be connected in series, parallel, or series-parallel to form an entirety, and then the entirety formed by the multiple battery cells 10 is directly accommodated in the above accommodation space 201 of the box 20. In some other embodiments, multiple battery cells 10 may alternatively be connected in series, parallel, or series-parallel first and then arranged and fixed to form a battery module, and the battery module is accommodated in the above accommodation space 201 of the box 20. In still some other embodiments, multiple battery cells 10 may alternatively be connected in series, parallel, or series-parallel first and then arranged and fixed to form multiple battery modules, and the multiple battery modules are then connected in series, parallel, or series-parallel to form an entirety that is accommodated in the above accommodation space 201 of the box 20.

In some embodiments, the box 20 of the battery 100 can serve as a portion of a chassis structure of the vehicle 1000. For example, a portion of the box 20 can become at least a portion of a chassis of the vehicle 1000, or a portion of the box 20 can become at least a portion of a cross beam and a longitudinal beam of the vehicle 1000.

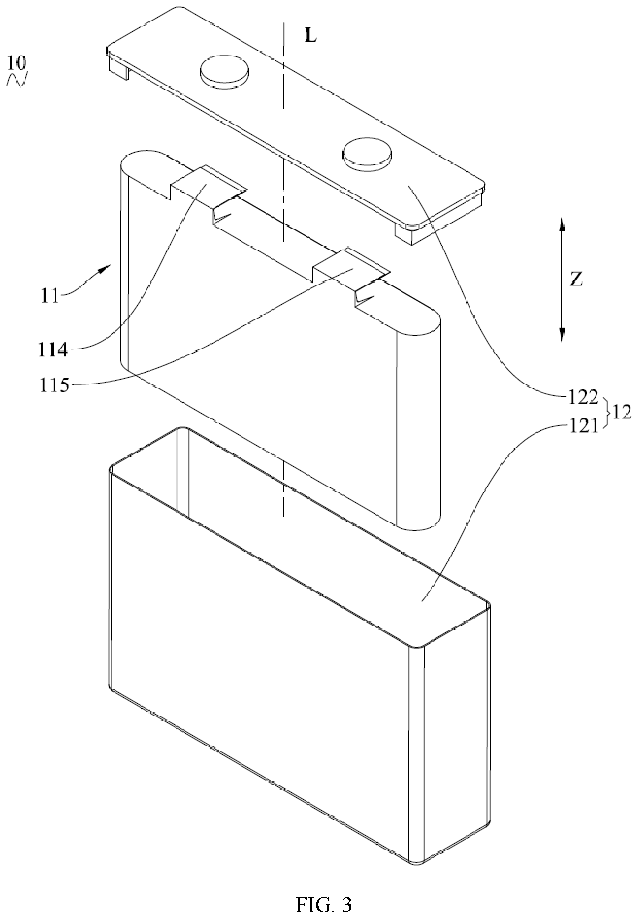

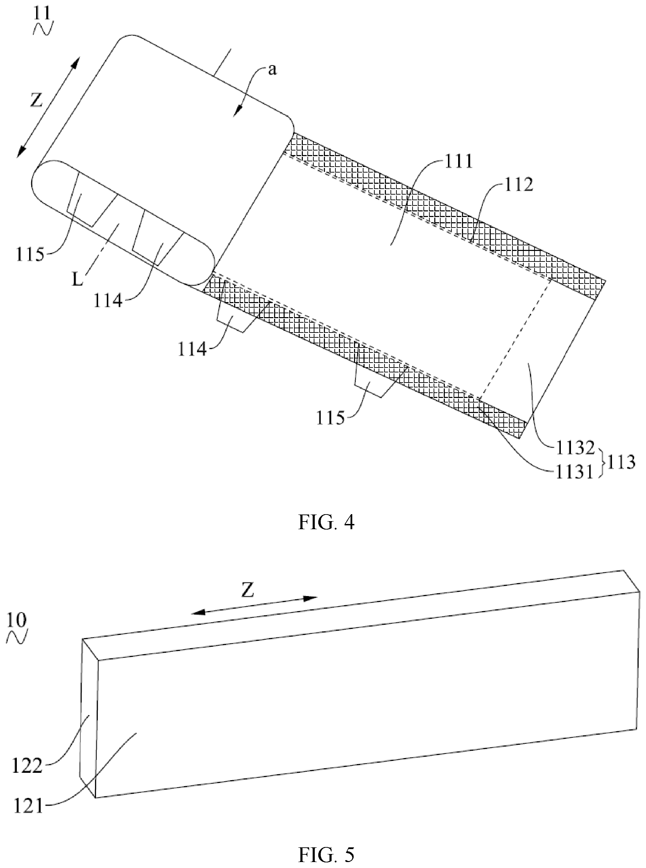

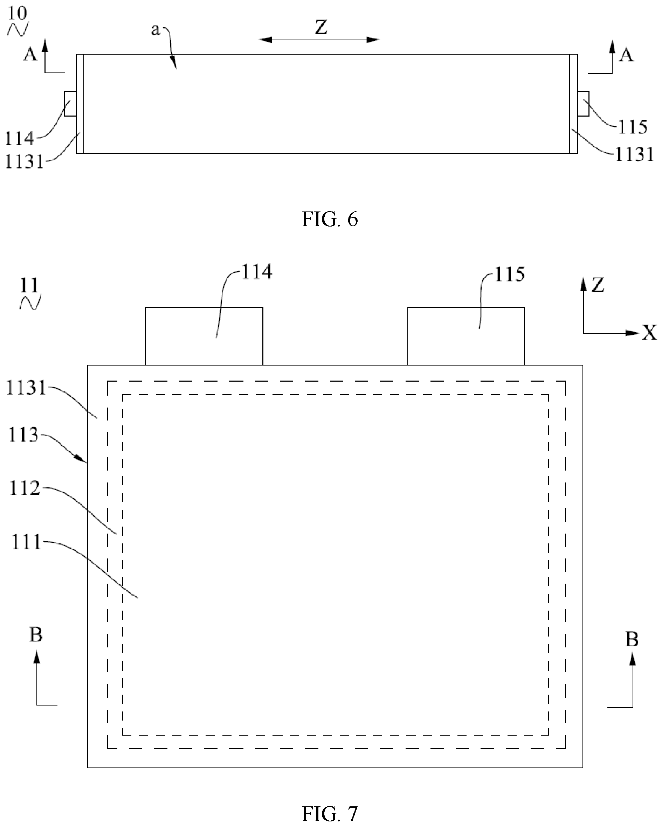

In some embodiments, reference is made to FIG. 3 to FIG. 7 in combination with other drawings. FIG. 3 is a schematic exploded view of a battery cell 10 according to some embodiments of the present application, FIG. 4 is a schematic diagram of a partially unfolded electrode assembly 11 of s battery cell 10 according to some embodiments of the present application, FIG. 5 is a schematic diagram of a battery cell 10 according to some other embodiments of the present application, FIG. 6 is a schematic diagram of an electrode assembly 11 of a battery cell 10 according to still some other embodiments of the present application, and FIG. 7 is a schematic diagram of an electrode assembly 11 of a battery cell 10 according to yet some other embodiments of the present application, specifically a schematic diagram of an electrode assembly 11 from a perspective along a second direction Y involved below. In FIG. 3 to FIG. 6, the electrode assembly 11 is mainly formed by winding a positive electrode sheet 111, a negative electrode sheet 112, and a separator 113, which is a wound structure involved below. In FIG. 7, the electrode assembly 11 is mainly formed by stacking a positive electrode sheet 111, a negative electrode sheet 112, and a separator 113, which is a stacked structure involved below.

The battery cell 10 may include an electrode assembly 11.

The electrode assembly 11 is a component in the battery cell 10 where electrochemical reactions take place. The electrode assembly 11 is mainly formed by winding the positive electrode sheet 111 and the negative electrode sheet 112, which is a wound structure as shown in FIG. 3 to FIG. 6; or the electrode assembly 11 is mainly formed by stacking the positive electrode sheet 111 and the negative electrode sheet 112, which is a stacked structure as shown in FIG. 7. A separator 113 is provided between the positive electrode sheet 111 and the negative electrode sheet 112.

When the electrode assembly 11 is a wound structure, the positive electrode sheet 111, the negative electrode sheet 112, and the separator 113 are wound.

When the electrode assembly 11 is a stacked structure, multiple separators 113 may be alternately stacked between the positive electrode sheet 111 and the negative electrode sheet 112. To be specific, the positive electrode sheet 111, the negative electrode sheet 112, and the separator 113 are stacked to form the electrode assembly 11, as shown in FIG. 7. Alternatively, the separator 113 may be provided between the positive electrode sheet 111 and the negative electrode sheet 112 in a winding manner. To be specific, the separator 113 is bent during the alternate stacking of the positive electrode sheet 111 and the negative electrode sheet 112, so that the separator 113 is between the positive electrode sheet 111 and the negative electrode sheet 112. That is, the positive electrode sheet 111, the negative electrode sheet 112, and the separator 113 are wound.

The positive electrode sheet 111 and the negative electrode sheet 112 each include an active material. The electrode assembly 11 is further provided with a positive electrode tab 114 and a negative electrode tab 115, where the positive electrode tab 114 is connected to the positive electrode sheet 111 and the negative electrode tab 115 is connected to the negative electrode sheet 112. The positive electrode tab 114 and the negative electrode tab 115 may be jointly located at one end of the electrode assembly 11, as shown in FIG. 3 and FIG. 4. Alternatively, the positive electrode tab 114 and the negative electrode tab 115 may be respectively located at two opposite ends of the electrode assembly 11, as shown in FIG. 5 to FIG. 7. The separator 113 is an insulating structure with insulating properties, and is configured to achieve insulation between the positive electrode sheet 111 and the negative electrode sheet 112, to alleviate the problem of self-discharge of the electrode assembly 11 caused by overlapping of the positive electrode sheet 111 and the negative electrode sheet 112.

In the battery cell 10, the electrode assembly 11 may be in a cylindrical shape, a square shape, a flat shape, or the like.

In the battery cell 10, there may be one or more electrode assemblies 11.

In some contexts, the electrode assembly 11 may also be referred to as a jelly roll, a wound structure, a stacked structure, or the like.

In some embodiments, the battery cell 10 may further include an electrolyte, where the electrolyte transports ions between the positive electrode sheet 111 and the negative electrode sheet 112. During the movement of ions between the positive electrode sheet 111 and the negative electrode sheet 112, the ions need to pass through the separator 113 between the positive electrode sheet 111 and the negative electrode sheet 112. The electrolyte involved in the embodiments of the present application may be liquid, gel, or solid.

In some embodiments, reference is made to FIG. 3 to FIG. 5 in combination with other drawings. The battery cell 10 may further include a housing assembly 12, where the housing assembly 12 refers to a component or assembly for defining the internal environment of the battery cell 10, and the electrode assembly 11 and the electrolyte are accommodated in the housing assembly 12.

In some embodiments, reference is made to FIG. 3 to FIG. 5 in combination with other drawings. The housing assembly 12 may include a housing 121 and an end cover 122. The housing 121 and the end cover 122 are components for jointly defining the internal environment of the battery cell 10, and the internal environment defined by the housing 121 and the end cover 122 is used to accommodate the electrode assembly 11 and the electrolyte. The housing 121 and the end cover 122 may be separate components. Specifically, the housing 121 has an opening, and the end cover 122 covers the opening of the housing 121 to jointly define the internal environment of the battery cell 10 with the housing 121, and isolate the internal environment of the battery cell 10 from the external environment. Alternatively, the housing 121 and the end cover 122 may alternatively be an integrated structure. Specifically, the end cover 122 and the housing 121 may form a shared connection surface therebetween before the electrode assembly 11 is placed into the housing, and when the electrode assembly 11 needs to be encapsulated after being placed into the housing, the end cover 122 covers the housing 121.

There may be one end cover 122, as shown in FIG. 3. Alternatively, there may be two end covers 122, where the two end covers 122 are respectively arranged at two opposite ends of the housing 121, as shown in FIG. 5.

The housing 121 may be in a cylindrical shape, a square shape, or the like, which may be determined according to the specific shape and size of the electrode assembly 11. The housing 121 and the end cover 122 may be made of various materials, such as copper, iron, aluminum, stainless steel, aluminum alloy, and plastic.

Reference is made to FIG. 3 to FIG. 7 in combination with other drawings. In FIG. 4, a portion of the positive electrode sheet 111, a portion of the negative electrode sheet 112, and a portion of the separator 113 are unfolded, outlines of the unfolded positive electrode sheet 111 and the unfolded negative electrode sheet 112 are both drawn with dashed lines, and edge sealing portions 1131 of the separator 113 are shadow regions. The battery cell 10 provided by these embodiments of the present application includes an electrode assembly 11, and the electrode assembly 11 includes a positive electrode sheet 111, a negative electrode sheet 112, and a separator 113. In some possible designs, reference is made to FIG. 7, where the positive electrode sheet 111, the negative electrode sheet 112, and the separator 113 are stacked so that the electrode assembly 11 is formed as a stacked structure. Alternatively, in some other possible designs, reference is made to FIG. 3 to FIG. 6, the positive electrode sheet 111, the negative electrode sheet 112, and the separator 113 are wound so that the electrode assembly 11 is formed as a wound structure. In this way, a separator 113 is provided between the positive electrode sheet 111 and the negative electrode sheet 112, so that the separator 113 can achieve insulation between the positive electrode sheet 111 and the negative electrode sheet 112. Some portions of the separator 113 protrude beyond an edge of the positive electrode sheet 111 and an edge of the negative electrode sheet 112 to form edge sealing portions 1131. At least some of the edge sealing portions 1131 are fixedly connected.

The edge sealing portions 1131 are portions of the separator 113, specifically the portions of the separator 113 protruding beyond the edge of the positive electrode sheet 111 and the edge of the negative electrode sheet 112. It can be understood that the separator 113 includes a main body portion 1132 and the edge sealing portions 1131 connected to the main body portion 1132. At least a portion of the main body portion 1132 is provided between the positive electrode sheet 111 and the negative electrode sheet 112 to achieve insulation between the positive electrode sheet 111 and the negative electrode sheet 112. Other portions of the separator 113 than the main body portion 1132 protrude beyond the edge of the positive electrode sheet 111 and the edge of the negative electrode sheet 112 to form the edge sealing portions 1131. At least a portion of the main body portion 1132 of the separator 113 is provided between the positive electrode sheet 111 and the negative electrode sheet 112, so that the separator 113 is provided between the positive electrode sheet 111 and the negative electrode sheet 112. The main body portion 1132 of the separator 113, the positive electrode sheet 111, and the negative electrode sheet 112 constitute a main structure a of the electrode assembly 11.

In some possible designs, the main body portion 1132 is only provided between the positive electrode sheet 111 and the negative electrode sheet 112 to achieve insulation between the positive electrode sheet 111 and the negative electrode sheet 112. Alternatively, in some other possible designs, a portion of the main body portion 1132 is provided between the positive electrode sheet 111 and the negative electrode sheet 112 to achieve insulation between the positive electrode sheet 111 and the negative electrode sheet 112; and another portion of the main body portion 1132 is provided on an outer side surface of an overall structure formed by the positive electrode sheet 111 and the negative electrode sheet 112 to wrap the overall structure formed by the positive electrode sheet 111 and the negative electrode sheet 112. This can alleviate the problem of overlapping of the electrode assembly 11 and an external electrical structure, as shown in FIG. 7.

In an example, when the electrode assembly 11 is a stacked structure, a portion of the main body portion 1132 is provided between the positive electrode sheet 111 and the negative electrode sheet 112; and along a stacking direction of the positive electrode sheet 111 and the negative electrode sheet 112, another portion of the main body portion 1132 may be provided on two opposite sides of the overall structure formed by the positive electrode sheet 111 and the negative electrode sheet 112. To be specific, the two opposite sides of the electrode assembly 11 along the stacking direction of the positive electrode sheet 111 and the negative electrode sheet 112 have the main body portion 1132 of the separator 113.

It should be noted herein that the positive electrode sheet 111 and the negative electrode sheet 112 are each a sheet-like structure, so the positive electrode sheet 111 and the negative electrode sheet 112 each have four sides. The edge of the positive electrode sheet 111 is a side edge of the positive electrode sheet 111. The edge of the negative electrode sheet 112 is a side edge of the negative electrode sheet 112.

In some possible designs, as shown in FIG. 3 to FIG. 6, the electrode assembly 11 is a wound structure. Specifically, the positive electrode sheet 111, the negative electrode sheet 112 and the separator 113 can be wound around a central axis L, and the central axis L is parallel to the first direction Z. The edge of the positive electrode sheet 111 may include an edge of one end or edges of two opposite ends of the positive electrode sheet 111 along the first direction Z, or may include an edge of one end or edges of two opposite ends of the positive electrode sheet 111 along the winding direction of the positive electrode sheet 111. Accordingly, the edge of the negative electrode sheet 112 may include an edge of one end or edges of two opposite ends of the negative electrode sheet 112 along the first direction Z, or may include an edge of one end or edges of two opposite ends of the negative electrode sheet 112 along the winding direction of the negative electrode sheet 112. The winding direction of the positive electrode sheet 111, the winding direction of the separator 113, and the winding direction of the negative electrode sheet 112 are substantially the same, which can be collectively referred to as the winding direction of the electrode assembly 11. It can be understood that some portions of the separator 113 protruding beyond the edge of the positive electrode sheet 111 and the edge of the negative electrode sheet 112 may include the case where some portions of the separator 113 protrude beyond the edge of one end or edges of the two opposite ends of the positive electrode sheet 111 and the negative electrode sheet 112 along the first direction Z, or may include the case where some portions of the separator 113 protrude beyond the edge of one end or edges of the two opposite ends of the positive electrode sheet 111 and the negative electrode sheet 112 along the winding direction of the electrode assembly 11. To be specific, the edge sealing portions 1131 may be provided beyond the edge of at least one of the following four ends: the two opposite ends of the positive electrode sheet 111 and the negative electrode sheet 112 along the first direction Z, and the two opposite ends of the positive electrode sheet 111 and the negative electrode sheet 112 along the winding direction of the electrode assembly 11. In other words, the edge sealing portions 1131 are provided on at least one of the two opposite ends of the electrode assembly 11 along the first direction Z and the two opposite ends of the electrode assembly 11 along the winding direction of the electrode assembly 11. In an example, some portions of the separator 113 protrude beyond the edge of one end of the positive electrode sheet 111 and the negative electrode sheet 112 along the winding direction of the electrode assembly 11, so that in the winding direction of the electrode assembly 11, the separator 113 continues to be wound after the positive electrode sheet 111, the negative electrode sheet 112, and the separator 113 are wound, that is, the electrode assembly 11 is terminated at the position of the separator 113 after winding.

In some other possible designs, as shown in FIG. 7, the electrode assembly 11 is a stacked structure. Specifically, the positive electrode sheet 111, the negative electrode sheet 112, and the separator 113 are stacked along the second direction Y. The edge of the positive electrode sheet 111 may include an edge of one end or edges of the two opposite ends of the positive electrode sheet 111 along the first direction Z, or may include an edge of one end or edges of the two opposite ends of the positive electrode sheet 111 along the third direction X. The edge of the negative electrode sheet 112 may include an edge of one end or edges of the two opposite ends of the negative electrode sheet 112 along the first direction Z, or may include an edge of one end or edges of the two opposite ends of the negative electrode sheet 112 along the third direction X. It can be understood that some portions of the separator 113 protruding beyond the edge of the positive electrode sheet 111 and the edge of the negative electrode sheet 112 may include the case where some portions of the separator 113 protrude beyond the edge of one end or the edges of the two opposite ends of the positive electrode sheet 111 and the negative electrode sheet 112 along the first direction Z, or may include the case where some portions of the separator 113 protrude beyond the edge of one end or the edges of the two opposite ends of the positive electrode sheet 111 and the negative electrode sheet 112 along the third direction X. To be specific, the edge sealing portions 1131 may be provided beyond at least one of the following four ends: two opposite ends of the positive electrode sheet 111 and the negative electrode sheet 112 along the first direction Z, and two opposite ends of the positive electrode sheet 111 and the negative electrode sheet 112 along the third direction X. In other words, the edge sealing portions 1131 are provided on at least one of the two opposite ends of the electrode assembly 11 along the first direction Z and the two opposite ends of the electrode assembly 11 along the third direction X.

The second direction Y intersects with the first direction Z, the first direction Z intersects with the third direction X, and the second direction Y intersects with the third direction X. The intersection of the first direction Z and the second direction Y means that the first direction Z and the second direction Y can form an included angle greater than 0° and less than 180°, that is, the first direction Z and the second direction Y are not parallel. The first direction Z and the second direction Y may be perpendicular to each other or not. The first direction Z and the second direction Y may be intersecting directions on the same plane or directions on mutually different planes, and a projection of the second direction Y on the plane where the first direction Z is located may intersect with the first direction Z. Accordingly, the intersection of the first direction Z and the third direction X and the intersection of the second direction Y and the third direction X have similar meanings, and details are not described herein again. In an example, the first direction Z is perpendicular to the second direction Y, the first direction Z is perpendicular to the third direction X, and the second direction Y is perpendicular to the third direction X. In some cases, the first direction Z may be a length direction or height direction of the battery cell 10, the second direction Y may be a thickness direction of the battery cell 10, and the third direction X may be a width direction of the battery cell 10.

At least some of the edge sealing portions 1131 are fixedly connected, meaning that some edge sealing portions 1131 among all the edge sealing portions 1131 of the electrode assembly 11 are fixedly connected, or all the edge sealing portions 1131 are fixedly connected. Specifically, the edge sealing portions 1131 are provided on at least one of the following four ends: two opposite ends of the electrode assembly 11 along the first direction Z and two opposite ends of the electrode assembly 11 along the winding direction of the electrode assembly 11, or provided on at least one of the following four ends: two opposite ends of the electrode assembly 11 along the first direction Z and two opposite ends of the electrode assembly 11 along the third direction X. When the edge sealing portions 1131 are provided at only one end of the electrode assembly 11, the edge sealing portions 1131 at this end are fixedly connected. When the edge sealing portions 1131 are provided at multiple ends of the electrode assembly 11, the edge sealing portions 1131 at these ends of the electrode assembly 11 are fixedly connected, as shown in FIG. 4 to FIG. 7; or the edge sealing portions 1131 at some ends of the electrode assembly 11 are fixedly connected, and the edge sealing portions 1131 at some other ends of the electrode assembly 11 are not fixedly connected. When the edge sealing portions 1131 at multiple ends of the electrode assembly 11 are fixedly connected, the edge sealing portions 1131 at these ends of the electrode assembly 11 are fixedly connected separately; or the edge sealing portions 1131 on at least two ends of the electrode assembly 11 are fixedly connected together, for example, the edge sealing portions 1131 at adjacent ends of the electrode assembly 11 are fixedly connected together.

For example, as shown in FIG. 4 and FIG. 6, the electrode assembly 11 is a wound structure, and the edge sealing portions 1131 are provided on both the two opposite ends of the electrode assembly 11 along the first direction Z. In an example, as shown in FIG. 4 and FIG. 6, the edge sealing portions 1131 at each end of the electrode assembly 11 are fixedly connected. In another example, the edge sealing portions 1131 at one end of the electrode assembly 11 are fixedly connected, and the edge sealing portions 1131 at the other end of the electrode assembly 11 are not fixedly connected. The edge sealing portions 1131 at one end of the electrode assembly 11 and the edge sealing portions 1131 at the other end of the electrode assembly 11 may be fixedly connected separately or fixed together.

In another example, as shown in FIG. 7, the electrode assembly 11 is a stacked structure, and the edge sealing portions 1131 are provided at all the following four ends: two opposite ends of the electrode assembly 11 along the first direction Z and two opposite ends of the electrode assembly 11 along the third direction X. In an example, as shown in FIG. 7, the edge sealing portions 1131 at each end of the electrode assembly 11 are fixedly connected. In another example, the edge sealing portions 1131 at some ends of the electrode assembly 11 are fixedly connected, and the edge sealing portions 1131 at some other ends of the electrode assembly 11 are not fixedly connected. When the edge sealing portions 1131 at multiple ends of the electrode assembly 11 are fixedly connected, the edge sealing portions 1131 at each end of the electrode assembly 11 are fixedly connected separately, or the edge sealing portions 1131 on at least two ends of the electrode assembly 11 are fixed together.

At least some of the edge sealing portions 1131 are fixedly connected, so that the positions of at least some of the edge sealing portions 1131 are fixed to some extent, which can maintain the insulation effect of the separator 113 between the positive electrode sheet 111 and the negative electrode sheet 112. For example, the edge sealing portions 1131 formed by the separator 113 located on two opposite sides of the positive electrode sheet 111 are fixedly connected. This can allow the edge sealing portions 1131 formed by the separator 113 located on the two opposite sides of the positive electrode sheet 111 to stably and reliably wrap the positive electrode sheet 111, so that the separator 113 can stably isolate the positive electrode sheet 111 from the adjacent negative electrode sheet 112, thereby further preventing the problem of overlapping of the positive electrode sheet 111 and the adjacent negative electrode sheet 112 to some extent. In another example, the edge sealing portions 1131 formed by the separator 113 located on two opposite sides of the negative electrode sheet 112 are fixedly connected. This allows the edge sealing portions 1131 formed by the separator 113 located on the two opposite sides of the negative electrode sheet 112 to stably and reliably wrap the negative electrode sheet 112, so that the separator 113 can stably isolate the negative electrode sheet 112 from the adjacent positive electrode sheet 111, thereby further preventing the problem of overlapping of the negative electrode sheet 112 and the adjacent positive electrode sheet 111 to some extent.

In the battery cell 10 provided by these embodiments of the present application, at least some portions of the separator 113 protrude beyond the edge of the positive electrode sheet 111 and the edge of the negative electrode sheet 112 to form the edge sealing portions 1131, and at least some of the edge sealing portions 1131 are fixedly connected, so that at least some portions of the separator 113 are fixedly connected beyond the edge of the positive electrode sheet 111 and the edge of the negative electrode sheet 112, and thus the positions of at least some portions of the separator 113 can be fixed to some extent. In this way, the separator 113 can stably and reliably wrap the positive electrode sheet 111 and the negative electrode sheet 112 to isolate the positive electrode sheet 111 from the negative electrode sheet 112 and achieve insulation between the positive electrode sheet 111 and the negative electrode sheet 112, alleviating the problem of overlapping of the positive electrode sheet 111 and the negative electrode sheet 112 caused by folding of the separator 113, thereby improving the reliability of the battery cell 10.

In addition, at least some portions of the separator 113 beyond the edge of the positive electrode sheet 111 and the edge of the negative electrode sheet 112 are fixedly connected to enhance the insulation protection effect of the separator 113 between the positive electrode sheet 111 and the negative electrode sheet 112, so that a step of laminating and fixing the separator 113 to the positive electrode sheet 111 can be omitted, and a step of laminating and fixing the separator 113 to the negative electrode sheet 112 can also be omitted. Based on this, on one hand, the problem of poor air permeability of the separator 113 caused by laminating and fixing the separator 113 to the positive electrode sheet 111 and laminating and fixing the separator 113 to the negative electrode sheet 112 can be alleviated, so that the problem of poor ion conductivity of the separator 113 caused by poor air permeability of the separator 113 can be alleviated. As a result, the ion conductivity of the separator 113 can be improved to enhance the charge and discharge performance of the battery cell 10, thereby improving the dynamic performance of the battery cell 10. On the other hand, the problem of poor adhesion performance of the separator 113 caused by laminating and fixing the separator 113 to the positive electrode sheet 111 and laminating and fixing the separator 113 to the negative electrode sheet 112 can also be alleviated, thereby alleviating the problem that the electrode assembly 11 cannot be reliably fixed together after shaping and is likely to be loosened due to poor adhesion performance of the separator 113. In this way, the structural integrity of the electrode assembly 11 can be improved, helping to improve the charge and discharge performance of the battery cell 10, thereby improving the dynamic performance of the battery cell 10.

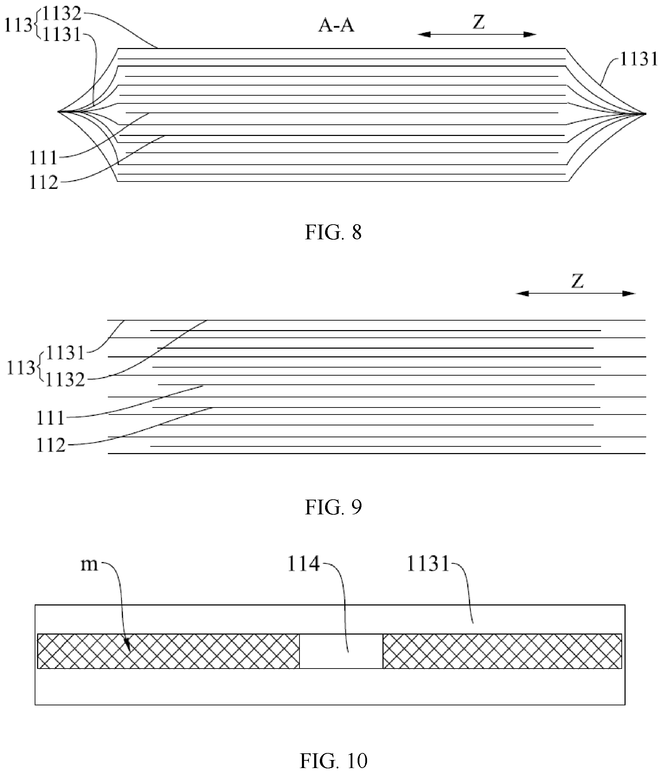

In some embodiments, reference is made to FIG. 4 and FIG. 6 to FIG. 9 in combination with other drawings. FIG. 8 is a cross-sectional view along A-A in FIG. 6, and FIG. 9 is a schematic diagram of edge sealing portions 1131 in FIG. 8 before fixation. The edge sealing portions 1131 located beyond the edges at the same end of the positive electrode sheet 111 and the negative electrode sheet 112 are fixedly connected.

It can be understood that the edge sealing portions 1131 at the same end of the electrode assembly 11 are fixed together. When the edge sealing portions 1131 are provided on only one end of the electrode assembly 11, the edge sealing portions 1131 are fixed together. When the edge sealing portions 1131 are provided on multiple ends of the electrode assembly 11, only the edge sealing portions 1131 at one end among the multiple edge sealing portions 1131 are fixed together; or the edge sealing portions 1131 on at least two ends are fixedly connected, and the edge sealing portions 1131 at the same end are fixedly connected separately.

The edge sealing portions 1131 on at least two ends are fixedly connected, and the edge sealing portions 1131 at the same end are fixedly connected separately, meaning that among the edge sealing portions 1131 on at least two ends of the electrode assembly 11, the edge sealing portions 1131 at one end are fixedly connected separately, and the edge sealing portions 1131 at the other end are also fixedly connected separately, to be specific, the edge sealing portions 1131 on at least two ends of the electrode assembly 11 are fixed separately.

In an example, when the electrode assembly 11 is a wound structure, as shown in FIG. 4 and FIG. 6, the edge sealing portions 1131 are provided on both the two opposite ends of the electrode assembly 11 along the first direction Z. Only the edge sealing portions 1131 at one end of the electrode assembly 11 are fixedly connected; or the edge sealing portions 1131 at the two opposite ends of the electrode assembly 11 are all fixed separately.

In another example, when the electrode assembly 11 is a stacked structure, as shown in FIG. 7, the edge sealing portions 1131 are provided on two opposite ends of the electrode assembly 11 along the first direction Z and two opposite ends of the electrode assembly 11 along the third direction X. Only the edge sealing portions 1131 at one end of the electrode assembly 11 are fixedly connected; or the edge sealing portions 1131 on at least two ends of the electrode assembly 11 are all fixed separately.

The edge sealing portions 1131 located beyond the edges at the same end of the positive electrode sheet 111 and the negative electrode sheet 112 are fixedly connected, so that at the same end of the electrode assembly 11, the edge sealing portions 1131 formed by the separator 113 on two opposite sides of any positive electrode sheet 111 are fixedly connected, thereby allowing the positive electrode sheet 111 to be wrapped. Moreover, the edge sealing portions 1131 formed by the separator 113 on two opposite sides of any negative electrode sheet 112 are fixedly connected, thereby allowing the negative electrode sheet 112 to be wrapped. In this way, the edge sealing portions 1131 at each end can achieve wrapping of the positive electrode sheet 111 and the negative electrode sheet 112 at the corresponding end, so that the separator 113 can stably achieve insulation between the positive electrode sheet 111 and the negative electrode sheet 112, thereby alleviating the problem of overlapping of the positive electrode sheet 111 and the negative electrode sheet 112 at the corresponding end. For example, as shown in FIG. 8 and FIG. 9, the edge sealing portions 1131 at one end (left end) of the electrode assembly 11 along the first direction Z are fixedly connected separately to achieve wrapping and insulation of the positive electrode sheet 111 and the negative electrode sheet 112 at one end along the first direction Z, thereby alleviating the problem of overlapping of the positive electrode sheet 111 and the negative electrode sheet 112 at one end in the first direction Z. The edge sealing portions 1131 at the other end (right end) of the electrode assembly 11 along the first direction Z are also fixedly connected separately to achieve wrapping and insulation of the positive electrode sheet 111 and the negative electrode sheet 112 at the other end along the first direction Z, thereby alleviating the problem of overlapping of the positive electrode sheet 111 and the negative electrode sheet 112 at the other end in the first direction Z.

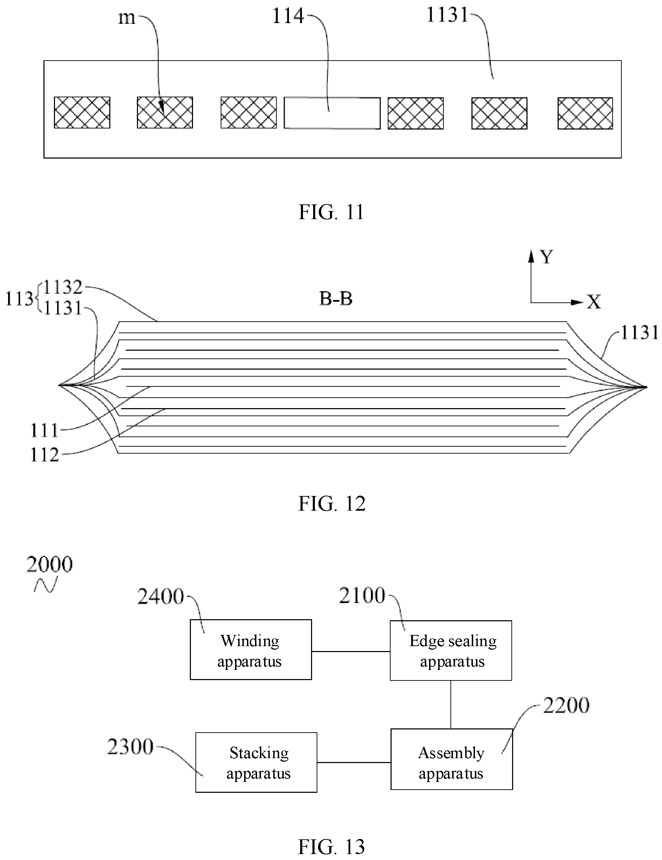

In some embodiments, reference is made to FIG. 10 and FIG. 11 in combination with other drawings. FIG. 10 is a side view of an electrode assembly 11 provided in FIG. 6 in some embodiments, and FIG. 11 is a side view of the electrode assembly 11 provided in FIG. 6 according to some other embodiments. The side views of the electrode assembly 11 provided in FIG. 10 and FIG. 11 are specifically schematic diagrams of the electrode assembly 11 from the perspective in the first direction Z, specifically a left view of FIG. 6. In FIG. 10 and FIG. 11, a shadow region is a fixed region m. The edge sealing portions 1131 located beyond the edges at the same end of the positive electrode sheet 111 and the negative electrode sheet 112 are fixed to form the fixed region m. Moreover, the fixed region m located beyond the edges at the same end of the positive electrode sheet 111 and the negative electrode sheet 112 is arranged continuously, as shown in FIG. 10; or the fixed region m beyond the same end of the positive electrode sheet 111 and the negative electrode sheet 112 is arranged in a spaced manner, as shown in FIG. 11.

The fixed region m refers to a region where the edge sealing portions 1131 are fixedly connected, which is a specific position where the edge sealing portions 1131 are fixedly connected.

The fixed region m located beyond the edges at the same end of the positive electrode sheet 111 and the negative electrode sheet 112 is arranged continuously, meaning that there is one fixed region m at the same end of the electrode assembly 11.

The fixed region m located beyond the edges at the same end of the positive electrode sheet 111 and the negative electrode sheet 112 is arranged in a spaced manner, meaning that multiple fixed regions m are provided at the same end of the electrode assembly 11, and the multiple fixed regions m are spaced apart.

Such arrangement allows for highly flexible fixing operation of the edge sealing portions 1131.

In addition, the fixed regions m beyond the edges at the same end of the positive electrode sheet 111 and the negative electrode sheet 112 are spaced apart, which allows the electrolyte to infiltrate from the edge sealing portions 1131 toward the middle position of the electrode assembly 11, thereby improving the infiltration efficiency of the electrode assembly 11.

The fixed region m may be in a square shape, a circular shape, a triangular shape, or the like.

In some embodiments, reference is made to FIG. 4 to FIG. 7 in combination with other drawings. In some possible designs, as shown in FIG. 4, a positive electrode tab 114 and a negative electrode tab 115 are spaced apart at one end of the electrode assembly 11 along the first direction Z; or in some other possible designs, as shown in FIG. 5 to FIG. 7, the positive electrode tab 114 and the negative electrode tab 115 are respectively arranged at two opposite ends of the electrode assembly 11 along the first direction Z. The positive electrode tab 114 is connected to the positive electrode sheet 111, and the negative electrode tab 115 is connected to the negative electrode sheet 112. The edge sealing portions 1131 are provided beyond at least one end of the positive electrode sheet 111 and the negative electrode sheet 112 along the first direction Z.

It can be understood that the electrode assembly 11 further includes the positive electrode tab 114 and the negative electrode tab 115. As shown in FIG. 4, the positive electrode tab 114 and the negative electrode tab 115 are spaced apart at one end of the electrode assembly 11 along the first direction Z; or as shown in FIG. 5 to FIG. 7, the positive electrode tab 114 and the negative electrode tab 115 are respectively arranged at two opposite ends of the electrode assembly 11 along the first direction Z. It can also be understood that the positive electrode sheet 111, the negative electrode sheet 112, and the main body portion 1132 of the separator 113 are stacked or wound to form a main structure a. As shown in FIG. 4, the positive electrode tab 114 and the negative electrode tab 115 are spaced apart at one end of the main structure a along the first direction Z; or as shown in FIG. 5 to FIG. 7, the positive electrode tab 114 and the negative electrode tab 115 are respectively arranged at two opposite ends of the main structure a along the first direction Z.

The positive electrode tab 114 is connected to the positive electrode sheet 111 to conduct the positive electrode tab 114 with the positive electrode sheet 111, so that the positive electrode tab 114 can serve as a current transport end of the positive electrode sheet 111. The negative electrode tab 115 is connected to the negative electrode sheet 112 to conduct the negative electrode tab 115 with the negative electrode sheet 112, so that the negative electrode tab 115 can serve as a current transport end of the negative electrode sheet 112.

The edge sealing portions 1131 are provided beyond at least one end of the positive electrode sheet 111 and the negative electrode sheet 112 along the first direction Z, meaning that the edge sealing portions 1131 are provided on at least one end of the electrode assembly 11 along the first direction Z, or it can be understood that the edge sealing portions 1131 are connected to at least one end of the main structure a along the first direction Z.

Based on this, when the edge sealing portions 1131 are provided at one end of the electrode assembly 11 along the first direction Z, the edge sealing portions 1131 can be fixedly connected. When the edge sealing portions 1131 are arranged at both the two opposite ends of the electrode assembly 11 along the first direction Z, the edge sealing portions 1131 at the two opposite ends of the electrode assembly 11 along the first direction Z can be fixedly connected separately; or the edge sealing portions 1131 at one end of the electrode assembly 11 along the first direction Z are fixedly connected.

Such arrangement allows the edge sealing portions 1131 beyond at least one end of the positive electrode sheet 111 and the negative electrode sheet 112 along the first direction Z to be fixedly connected, so that the separator 113 can wrap the positive electrode sheet 111 and the negative electrode sheet 112 on at least one end of the electrode assembly 11 along the first direction Z, thereby alleviating the problem of overlapping of the positive electrode sheet 111 and the negative electrode sheet 112 on at least one end in the first direction Z.

It should be additionally noted herein that in some possible designs, as shown in FIG. 4, in the case where the positive electrode tab 114 and the negative electrode tab 115 are spaced apart at one end of the electrode assembly 11 along the first direction Z: when the edge sealing portions 1131 are provided at one end of the electrode assembly 11 along the first direction Z, the edge sealing portions 1131 can be provided at an end of the electrode assembly 11 without the positive electrode tab 114 and the negative electrode tab 115, and the edge sealing portions 1131 can also be provided at an end of the electrode assembly 11 having the positive electrode tab 114 and the negative electrode tab 115, so that after being fixedly connected, the edge sealing portions 1131 can block the positive electrode tab 114 and the negative electrode tab 115, thereby alleviating the problem of self-discharge of the electrode assembly 11 caused by contact between the positive electrode tab 114 and the negative electrode sheet 112 after bending, and also alleviating the problem of self-discharge of the electrode assembly 11 caused by contact between the negative electrode tab 115 and the positive electrode sheet 111 after bending. When the edge sealing portions 1131 are arranged at two opposite ends of the electrode assembly 11 along the first direction Z, as shown in FIG. 4, the edge sealing portions 1131 at one end can block the positive electrode tab 114 and the negative electrode tab 115 after being fixedly connected, thereby alleviating the problem of self-discharge of the electrode assembly 11 caused by contact between the positive electrode tab 114 and the negative electrode sheet 112 after bending, and also alleviating the problem of self-discharge of the electrode assembly 11 caused by contact between the negative electrode tab 115 and the positive electrode sheet 111 after bending.

In some other possible designs, as shown in FIG. 5 to FIG. 7, in the case where the positive electrode tab 114 and the negative electrode tab 115 are respectively arranged at two opposite ends of the electrode assembly 11 along the first direction Z: when the edge sealing portions 1131 are provided at one end of the electrode assembly 11 along the first direction Z, the edge sealing portions 1131 can be located at the end of the electrode assembly 11 having the positive electrode tab 114, so that after being fixedly connected, the edge sealing portions 1131 can block the positive electrode tab 114, thereby alleviating the problem of self-discharge of the electrode assembly 11 caused by contact between the positive electrode tab 114 and the negative electrode sheet 112 after bending; and the edge sealing portions 1131 can also be located at an end of the electrode assembly 11 having the negative electrode tab 115, so that after being fixedly connected, the edge sealing portions 1131 can block the negative electrode tab 115, thereby alleviating the problem of self-discharge of the electrode assembly 11 caused by contact between the negative electrode tab 115 and the positive electrode sheet 111 after bending. When the edge sealing portions 1131 are provided at two opposite ends of the electrode assembly 11 along the first direction Z, as shown in FIG. 5 to FIG. 7, the edge sealing portions 1131 at one end can block the positive electrode tab 114 after being fixedly connected, to alleviate the problem of self-discharge of the electrode assembly 11 caused by contact between the positive electrode tab 114 and the negative electrode sheet 112 after bending; the edge sealing portions 1131 at the other end can block the negative electrode tab 115 after being fixedly connected, to alleviate the problem of self-discharge of the electrode assembly 11 caused by contact between the negative electrode tab 115 and the positive electrode sheet 111 after bending.

In some embodiments, reference is made to FIG. 4 to FIG. 7 in combination with other drawings. The edge sealing portions 1131 are provided beyond both two opposite ends of the positive electrode sheet 111 and the negative electrode sheet 112 along the first direction Z, and the edge sealing portions 1131 located beyond each of the ends of the positive electrode sheet 111 and the negative electrode sheet 112 along the first direction Z are fixedly connected.

It can be understood that the edge sealing portions 1131 are provided at both the two opposite ends of the electrode assembly 11 along the first direction Z, and among the edge sealing portions 1131 at the two opposite ends of the electrode assembly 11 along the first direction Z, the edge sealing portions 1131 at each end are fixedly connected.

Such arrangement allows the separator 113 to be fixedly connected at the two opposite ends of the electrode assembly 11 along the first direction Z to wrap the positive electrode sheet 111 and the negative electrode sheet 112 at the two opposite ends of the electrode assembly 11 along the first direction Z. In this way, the problem of overlapping of the positive electrode sheet 111 and the negative electrode sheet 112 at the two opposite ends in the first direction Z can be alleviated.

In some embodiments, reference is made to FIG. 4 in combination with other drawings. The positive electrode tab 114 and the negative electrode tab 115 are spaced apart at one end of the electrode assembly 11 along the first direction Z. In the first direction Z, the edge sealing portions 1131 are provided beyond an end of the positive electrode sheet 111 and the negative electrode sheet 112 having the positive electrode tab 114 and the negative electrode tab 115. Moreover, in the first direction Z, the edge sealing portions 1131 beyond the end of the positive electrode sheet 111 and the negative electrode sheet 112 having the positive electrode tab 114 and the negative electrode tab 115 are fixedly connected and fixed to the positive electrode tab 114; or in the first direction Z, the edge sealing portions 1131 beyond an end of the positive electrode sheet 111 and the negative electrode sheet 112 having the positive electrode tab 114 and the negative electrode tab 115 are fixedly connected and fixed to the negative electrode tab 115; or as shown in FIG. 4, in the first direction Z, the edge sealing portions 1131 beyond the end of the positive electrode sheet 111 and the negative electrode sheet 112 having the positive electrode tab 114 and the negative electrode tab 115 are fixedly connected and fixed to the positive electrode tab 114 and the negative electrode tab 115.

The edge sealing portions 1131 beyond the end of the positive electrode sheet 111 and the negative electrode sheet 112 having the positive electrode tab 114 and the negative electrode tab 115 are fixedly connected and fixed to the positive electrode tab 114, so that the problem of overlapping of the positive electrode tab 114 and the negative electrode sheet 112 after bending can be alleviated. The edge sealing portions 1131 beyond the end of the positive electrode sheet 111 and the negative electrode sheet 112 having the positive electrode tab 114 and the negative electrode tab 115 are fixedly connected and fixed to the negative electrode tab 115, so that the problem of overlapping of the negative electrode tab 115 and the positive electrode sheet 111 after bending can be alleviated. The edge sealing portions 1131 beyond the end of the positive electrode sheet 111 and the negative electrode sheet 112 having the positive electrode tab 114 and the negative electrode tab 115 are fixedly connected and fixed to the positive electrode tab 114 and the negative electrode tab 115, so that the problem of overlapping of the positive electrode tab 114 and the negative electrode sheet 112 and the problem of overlapping of the negative electrode tab 115 and the positive electrode sheet 111 can be alleviated.

In some embodiments, reference is made to FIG. 5 to FIG. 7 in combination with other drawings. The positive electrode tab 114 and the negative electrode tab 115 are respectively arranged at two opposite ends of the electrode assembly 11 along the first direction Z, and the edge sealing portions 1131 are provided beyond both the two opposite ends of the positive electrode sheet 111 and the negative electrode sheet 112 along the first direction Z. In some possible designs, the edge sealing portions 1131 beyond the end of the positive electrode sheet 111 and the negative electrode sheet 112 having the positive electrode tab 114 are fixedly connected and fixed to the positive electrode tab 114; or in some other possible designs, the edge sealing portions 1131 beyond the end of the positive electrode sheet 111 and the negative electrode sheet 112 having the negative electrode tab 115 are fixedly connected and fixed to the negative electrode tab 115; or in still some other possible designs, the edge sealing portions 1131 beyond the end of the positive electrode sheet 111 and the negative electrode sheet 112 having the positive electrode tab 114 are fixedly connected and fixed to the positive electrode tab 114, and the edge sealing portions 1131 beyond the end of the positive electrode sheet 111 and the negative electrode sheet 112 having the negative electrode tab 115 are fixedly connected and fixed to the negative electrode tab 115.

It can be understood that the positive electrode tab 114 and the negative electrode tab 115 are respectively arranged at two opposite ends of the electrode assembly 11 along the first direction Z, and the edge sealing portions 1131 are provided at both the two opposite ends of the electrode assembly 11 along the first direction Z.

The edge sealing portions 1131 at one end of the electrode assembly 11 along the first direction Z are fixedly connected and fixed to the positive electrode tab 114; and the edge sealing portions 1131 at the other end of the electrode assembly 11 along the first direction Z are fixedly connected and fixed to the negative electrode tab 115. Alternatively, the edge sealing portions 1131 at one end of the electrode assembly 11 along the first direction Z are fixedly connected and fixed to the positive electrode tab 114. Alternatively, the edge sealing portions 1131 at one end of the electrode assembly 11 along the first direction Z are fixedly connected and fixed to the negative electrode tab 115.

The edge sealing portions 1131 are fixedly connected and fixed to the positive electrode tab 114, so that the problem of self-discharge of the electrode assembly 11 caused by overlapping of the positive electrode tab 114 and the negative electrode sheet 112 can be alleviated. The edge sealing portions 1131 are fixedly connected and fixed to the negative electrode tab 115, so that the problem of self-discharge of the electrode assembly 11 caused by overlapping of the negative electrode tab 115 and the positive electrode sheet 111 can be alleviated.

Moreover, the positive electrode tab 114 and the negative electrode tab 115 are respectively provided at two opposite ends of the electrode assembly 11 along the first direction Z, so that the battery cell 10 can be provided with an electrolyte injection hole in at least one end in a direction perpendicular to the first direction Z. In this way, during electrolyte injection, the battery cell 10 is in a lying state where the first direction Z is parallel to the horizontal plane. For example, the electrode assembly 11 is in a state shown in FIG. 6, where the electrolyte injection hole is located above the electrode assembly 11. Based on this, after the electrolyte is injected into the battery cell 10, since the separator 113 protrudes beyond two opposite ends of the positive electrode sheet 111 and the negative electrode sheet 112 along the first direction Z to form the edge sealing portions 1131, the electrolyte can infiltrate the edge sealing portions 1131 at the two opposite ends of the electrode assembly 11 along the first direction Z, then infiltrate upward, and gradually infiltrate toward the middle position of the electrode assembly 11 along the first direction Z. This helps to increase the infiltration speed and infiltration amount of the electrolyte, thereby improving the electrolyte infiltration of the battery cell 10 and the cycling performance of the battery cell 10.

In some embodiments, reference is made to FIG. 7 and FIG. 12 in combination with other drawings. FIG. 12 is a cross-sectional view along B-B in FIG. 7. The positive electrode sheet 111, the negative electrode sheet 112, and the separator 113 are stacked along the second direction Y so that the electrode assembly 11 is formed as a stacked structure. The edge sealing portions 1131 are provided beyond at least one end of the positive electrode sheet 111 and the negative electrode sheet 112 along the third direction X. The first direction Z intersects with the second direction Y, the first direction Z intersects with the third direction X, and the second direction Y intersects with the third direction X.

It can be understood that, as shown in FIG. 12, the positive electrode sheet 111 and the negative electrode sheet 112 are alternately stacked along the second direction Y, and the separator 113 is stacked between any adjacent positive electrode sheet 111 and negative electrode sheet 112 along the second direction Y. To be specific, along the second direction Y, a positive electrode sheet 111, a separator 113, a negative electrode tab 115, a separator 113, a positive electrode sheet 111, ..., and the like are stacked in order in the electrode assembly 11.

In some possible designs, the edge sealing portions 1131 are provided at one end of the electrode assembly 11 along the third direction X, and the edge sealing portions 1131 can be fixedly connected. In some other possible designs, the edge sealing portions 1131 are provided at two opposite ends of the electrode assembly 11 along the third direction X, and the edge sealing portions 1131 at the two opposite ends of the electrode assembly 11 along the third direction X can be fixedly connected separately; or the edge sealing portions 1131 at one end of the electrode assembly 11 along the third direction X are fixedly connected.

Such arrangement allows the edge sealing portions 1131 beyond at least one end of the positive electrode sheet 111 and the negative electrode sheet 112 along the third direction X to be fixedly connected, so that the separator 113 can wrap the positive electrode sheet 111 and the negative electrode sheet 112 on at least one end of the electrode assembly 11 along the third direction X, thereby alleviating the problem of overlapping of the positive electrode sheet 111 and the negative electrode sheet 112 on at least one end in the third direction X.

In some embodiments, reference is made to FIG. 7 and FIG. 12 in combination with other drawings. The edge sealing portions 1131 are provided beyond two opposite ends of the positive electrode sheet 111 and the negative electrode sheet 112 along the third direction X, and the edge sealing portions 1131 located beyond each of the ends of the positive electrode sheet 111 and the negative electrode sheet 112 along the third direction X are fixedly connected.

It can be understood that the edge sealing portions 1131 are provided at both the two opposite ends of the electrode assembly 11 along the third direction X, and among the edge sealing portions 1131 at the two opposite ends of the electrode assembly 11 along the third direction X, the edge sealing portions 1131 at each end are fixedly connected.

Such arrangement allows the separator 113 to be fixedly connected at the two opposite ends of the electrode assembly 11 along the third direction X to wrap the positive electrode sheet 111 and the negative electrode sheet 112 at the two opposite ends of the electrode assembly 11 along the third direction X. In this way, the problem of overlapping of the positive electrode sheet 111 and the negative electrode sheet 112 at the two opposite ends in the third direction X can be alleviated.

In some embodiments, the edge sealing portions 1131 are fixed through heat sealing.

Heat sealing refers to edge sealing implemented through heating. It can be understood that after the positive electrode sheet 111, the negative electrode sheet 112, and the separator 113 form the electrode assembly 11, the edge sealing portions 1131 can be heated, so that the edge sealing portions 1131 are melted and fixedly connected after heating.

Alternatively, in some other embodiments, the separator 113 is provided with an adhesive layer at each edge sealing portion 1131, and the edge sealing portions 1131 are fixedly connected through the adhesive layers.

The adhesive layer refers to a layer structure with adhesion capability, which may be, but is not limited to, a gluing layer with gluing capability.

At least one of two opposite sides of the separator 113 may have an adhesive layer, where the adhesive layer is located at an edge sealing position of the separator 113. In this way, after the separator 113, the positive electrode sheet 111, and the negative electrode sheet 112 form the electrode assembly 11, the edge sealing portions 1131 can be adhesively fixed through the adhesive layers.

Such arrangement provides more ways to fixedly connect the edge sealing portions 1131, with high flexibility.

Reference is made to FIG. 2 in combination with other drawings. The battery 100 provided by this embodiment of the present application includes the battery cell 10. The battery cell 10 in this embodiment is the same as the battery cell 10 in the previous embodiment. For details, reference is made to the relevant description of the battery cell 10 in the previous embodiment, and details are not described herein again.

The battery 100 provided by this embodiment of the present application, by adopting the battery cell 10 described above, can alleviate the problem of overlapping of the positive electrode sheet 111 and the negative electrode sheet 112 caused by folding of the separator 113, improving the reliability of the battery cell 10, thereby further improving the reliability of the battery 100.

Reference is made to FIG. 1, where the electric apparatus provided by this embodiment of the present application includes the battery cell 10 or the battery 100. The battery cell 10 and the battery 100 in this embodiment are the same as the battery cell 10 and the battery 100 in the previous embodiment. For details, reference is made to the relevant description of the battery cell 10 and the battery 100 in the previous embodiment, and details are not described herein again.

The electric apparatus provided by this embodiment of the present application, by adopting the battery cell 10 or the battery 100 described above, can improve the reliability of the battery cell 10, improving the reliability of the battery 100, thereby further improving the reliability of the electric apparatus.

Reference is made to FIG. 13 in combination with other drawings. FIG. 13 is a schematic diagram of a device 2000 for processing a battery according to some embodiments of the present application. The device 2000 for processing a battery provided by these embodiments of the present application is applied to a battery cell 10. It can be understood that the device 2000 for processing a battery is configured to process the battery cell 10. The battery cell 10 in these embodiments is the same as the battery cell 10 in the previous embodiment. For details, reference is made to the relevant description of the battery cell 10 in the previous embodiment, and details are not described herein again.

The device 2000 for processing a battery provided by these embodiments of the present application includes an edge sealing apparatus 2100, where the edge sealing apparatus 2100 is configured to fixedly connect at least some of edge sealing portions 1131 of a separator 113 protruding beyond an edge of the positive electrode sheet 111 and an edge of the negative electrode sheet 112.

The edge sealing apparatus 2100 refers to an apparatus configured to fixedly connect the edge sealing portions 1131 of the separator 113.

In an example, the edge sealing apparatus 2100 may be, but is not limited to, a resistance type heating apparatus, which can achieve heating of the edge sealing portions 1131 by the edge sealing apparatus 2100 through electrification, thereby realizing heat-sealing fixation of the edge sealing portions 1131.

The device 2000 for processing a battery provided by these embodiments of the present application is provided with the edge sealing apparatus 2100, so that at least some of the edge sealing portions 1131 of the separator 113 protruding beyond the edge of the positive electrode sheet 111 and the edge of the negative electrode sheet 112 can be fixed, so that at least some portions of the separator 113 are fixedly connected beyond the edge of the positive electrode sheet 111 and the edge of the negative electrode sheet 112, thereby allowing the positions of at least some portions of the separator 113 to be fixed to some extent. In this way, the separator 113 can stably and reliably wrap the positive electrode sheet 111 and the negative electrode sheet 112 to isolate the positive electrode sheet 111 from the negative electrode sheet 112 and achieve insulation between the positive electrode sheet 111 and the negative electrode sheet 112, alleviating the problem of overlapping of the positive electrode sheet 111 and the negative electrode sheet 112 caused by folding of the separator 113, thereby improving the reliability of the battery cell 10.

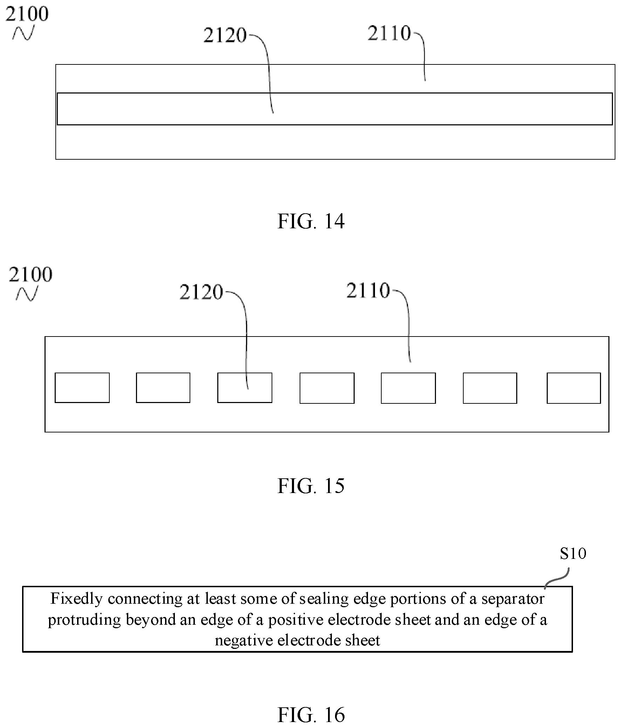

In some embodiments, reference is made to FIG. 13 to FIG. 15 in combination with other drawings. FIG. 14 is a schematic diagram of an edge sealing apparatus 2100 of a device 2000 for processing a battery according to some embodiments of the present application, and FIG. 15 is a schematic diagram of an edge sealing apparatus 2100 of a device 2000 for processing a battery according to some other embodiments of the present application. The edge sealing apparatus 2100 includes a connecting member 2110 and a heating member 2120. The heating member 2120 is provided on the connecting member 2110 and is configured to heat the edge sealing portions 1131 to fix the edge sealing portions 1131.

The heating member 2120 refers to a component for heating, and the connecting member 2110 refers to a component for connecting the heating member 2120. The heating member 2120 may be, but is not limited to, a heating resistor.

Specifically, during operation, the connecting member 2110 can be driven to move, so that the heating member 2120 moves to the edge sealing portions 1131 under the drive of the connecting member 2110. In this way, the edge sealing portions 1131 can be heated by the heating member 2120, thereby realizing heat-sealing fixation of the edge sealing portions 1131.

With such arrangement, the edge sealing portions 1131 can be fixed through heat sealing.

In some embodiments, reference is made to FIG. 14 in combination with other drawings, where the edge sealing apparatus 2100 includes one heating member 2120.

With such arrangement, when the edge sealing apparatus 2100 heats the edge sealing portions 1131 at the same end of the electrode assembly 11, the heating member 2120 of the edge sealing apparatus 2100 may be in contact with the edge sealing portions 1131 at the same end of the electrode assembly 11. In this way, the edge sealing portions 1131 at the same end of the electrode assembly 11 can be heated and fixed to form one fixed region m, that is, the fixed region m at the same end of the electrode assembly 11 is arranged continuously.

Alternatively, in some other embodiments, reference is made to FIG. 15 in combination with other drawings. The edge sealing apparatus 2100 includes multiple heating members 2120, where the multiple heating members 2120 are spaced apart on one side of the connecting member 2110.

With such arrangement, when the edge sealing apparatus 2100 heats the edge sealing portions 1131 at the same end of the electrode assembly 11, the multiple spaced heating members 2120 of the edge sealing apparatus 2100 may be in contact with the edge sealing portions 1131 at the same end of the electrode assembly 11, and the heating members 2120 can heat and fix the edge sealing portions 1131 to form fixed regions m. In this way, the edge sealing portions 1131 at the same end of the electrode assembly 11 can be heated and fixed to form multiple fixed regions m that are spaced apart, that is, the fixed regions m at the same end of the electrode assembly 11 are spaced apart.

It should be additionally noted herein that during heat sealing of the edge sealing portions 1131, one edge sealing apparatus 2100 can be used for heat-sealing fixation of the edge sealing portions 1131 at the same end of the electrode assembly 11, or multiple edge sealing apparatuses 2100 can be used for heat-sealing fixation of the edge sealing portions 1131 at the same end of the electrode assembly 11.

In an example, as shown in FIG. 12, two edge sealing apparatuses 2100 may be respectively located on two opposite sides of the electrode assembly 11 along the second direction Y, so that the two edge sealing apparatuses 2100 respectively perform heat sealing on the edge sealing portions 1131 at the same end of the electrode assembly 11 on the two opposite sides along the second direction Y, thereby allowing the edge sealing portions 1131 to be located in the middle position of the electrode assembly 11 along the second direction Y after heat-sealing fixation.

It should also be additionally noted herein that after the positive electrode sheet 111, the negative electrode sheet 112, and the separator 113 are stacked or wound to form the electrode assembly 11, the edge sealing portions 1131 of the separator 113 are fixed through heat sealing by the edge sealing apparatus 2100.

In some embodiments, reference is made to FIG. 13 in combination with other drawings. The device 2000 for processing a battery further includes an assembly apparatus 2200 and a stacking apparatus 2300. The assembly apparatus 2200 is configured to assemble the electrode assembly 11 into a battery cell 10. The stacking apparatus 2300 is configured to stack multiple battery cells 10 to form a battery 100.

The assembly apparatus 2200 refers to an apparatus for assembling the electrode assembly 11 into a battery cell 10, and the stacking apparatus 2300 refers to an apparatus for stacking multiple battery cells 10 to form a battery 100.

It can be understood that during operation of the device 2000 for processing a battery, the edge sealing portions 1131 of the electrode assembly 11 can be fixed through heat sealing by the edge sealing apparatus 2100; then the electrode assembly 11, a housing 121, an end cover 122, and the like are assembled into the battery cell 10 by the assembly apparatus 2200; and ultimately, multiple battery cells 10 are stacked by the stacking apparatus 2300 to form the battery 100.

With such arrangement, the battery 100 can be obtained.

In some embodiments, reference is still made to FIG. 13 in combination with other drawings. The device 2000 for processing a battery may further include a winding apparatus 2400, where the winding apparatus 2400 refers to an apparatus for winding the positive electrode sheet 111, the negative electrode sheet 112, and the separator 113 to form the electrode assembly 11.

Specifically, the winding apparatus 2400 winds the positive electrode sheet 111, the negative electrode sheet 112, and the separator 113 to obtain the electrode assembly 11 that is a wound structure.

Reference is made to FIG. 16 in combination with other drawings. FIG. 16 is a method flowchart of a method for processing a battery 100 according to some embodiments of the present application. The method for processing a battery 100 provided by these embodiments of the present application is applied to the battery cell 10. It can be understood that the method for processing a battery 100 is used to process the battery cell 10. The battery cell 10 in these embodiments is the same as the battery cell 10 in the previous embodiment. For details, reference is made to the relevant description of the battery cell 10 in the previous embodiment, and details are not described herein again.

The method for processing a battery 100 provided by these embodiments of the present application includes the following step.

S10. Fixedly connect at least some of edge sealing portions 1131 of a separator 113 protruding beyond an edge of a positive electrode sheet 111 and an edge of a negative electrode sheet 112.

In the method for processing a battery 100 provided by these embodiments of the present application, at least some of the edge sealing portions 1131 of the separator 113 protruding beyond an edge of the positive electrode sheet 111 and an edge of the negative electrode sheet 112 are fixed, so that at least some portions of the separator 113 are fixedly connected beyond the edge of the positive electrode sheet 111 and the edge of the negative electrode sheet 112, thereby allowing the positions of at least some portions of the separator 113 to be fixed to some extent. In this way, the separator 113 can stably and reliably wrap the positive electrode sheet 111 and the negative electrode sheet 112 to isolate the positive electrode sheet 111 from the negative electrode sheet 112 and achieve insulation between the positive electrode sheet 111 and the negative electrode sheet 112, alleviating the problem of overlapping of the positive electrode sheet 111 and the negative electrode sheet 112 caused by folding of the separator 113, thereby improving the reliability of the battery cell 10.

In some embodiments, the step S10 of fixedly connecting at least some of edge sealing portions 1131 of a separator 113 protruding beyond an edge of a positive electrode sheet 111 and an edge of a negative electrode sheet 112 includes the following step.

S11. Fixedly connect the edge sealing portions 1131 of the separator 113 located beyond edges at the same end of the positive electrode sheet 111 and the negative electrode sheet 112.

In an example, as shown in FIG. 4 to FIG. 6, FIG 8, and FIG. 9, the edge sealing portions 1131 are provided at both the two opposite ends of the positive electrode sheet 111 and the negative electrode sheet 112 along the first direction Z. Among the edge sealing portions 1131 at the two opposite ends, only the edge sealing portions 1131 at one end are fixedly connected; or the edge sealing portions 1131 at each end are fixedly connected separately.

In another example, as shown in FIG. 7 and FIG. 12, the edge sealing portions 1131 are provided at two opposite ends of the positive electrode sheet 111 and the negative electrode sheet 112 along the first direction Z as well as at two opposite ends of the positive electrode sheet 111 and the negative electrode sheet 112 along the third direction X. Among the edge sealing portions 1131 at the four ends, the edge sealing portions 1131 at each end are fixedly connected separately; or the edge sealing portions 1131 at some ends are fixedly connected separately.

The edge sealing portions 1131 located beyond the edges at the same end of the positive electrode sheet 111 and the negative electrode sheet 112 are fixedly connected, so that in the same end of the electrode assembly 11, the edge sealing portions 1131 formed by the separator 113 on two opposite sides of any positive electrode sheet 111 are fixedly connected, thereby allowing the positive electrode sheet 111 to be wrapped. Moreover, the edge sealing portions 1131 formed by the separator 113 on two opposite sides of any negative electrode sheet 112 are fixedly connected, thereby allowing the negative electrode sheet 112 to be wrapped. In this way, the edge sealing portions 1131 at each end can achieve wrapping of the positive electrode sheet 111 and the negative electrode sheet 112 at the corresponding end, so that the separator 113 can stably achieve insulation between the positive electrode sheet 111 and the negative electrode sheet 112, thereby alleviating the problem of overlapping of the positive electrode sheet 111 and the negative electrode sheet 112 at the corresponding end.

In some embodiments, the step S11 of fixedly connecting the edge sealing portions 1131 of the separator 113 located beyond the edges at the same end of the positive electrode sheet 111 and the negative electrode sheet 112 includes the following steps.

S111. Press an edge sealing apparatus 2100 onto the edge sealing portions 1131 of the separator 113 protruding beyond the edges at the same end of the positive electrode sheet 111 and the negative electrode sheet 112.

Specifically, in this step, a heating member 2120 of the edge sealing apparatus 2100 is pressed onto the edge sealing portions 1131 of the separator 113.

S112. Heat the edge sealing portions 1131 by the edge sealing apparatus 2100.

Specifically, in this step, heating is performed by the heating member 2120 to melt the edge sealing portions 1131 through heating, thereby realizing fixation.

By adopting the above technical solution, the edge sealing portions 1131 are fixed by heat sealing.

In some embodiments, before the step S10 of fixedly connecting at least some of edge sealing portions 1131 of a separator 113 protruding beyond an edge of the positive electrode sheet 111 and an edge of the negative electrode sheet 112, the method includes the following step.

S20. Stack or wind the positive electrode sheet 111, the negative electrode sheet 112, and the separator 113.

It can be understood that the positive electrode sheet 111, the negative electrode sheet 112, and the separator 113 are first stacked to form the electrode assembly 11 as a stacked structure; or the positive electrode sheet 111, the negative electrode sheet 112, and the separator 113 are first wound to form the electrode assembly 11 as a wound structure. Then, the edge sealing portions 1131 of the electrode assembly 11 are fixed by the edge sealing apparatus 2100.

With such arrangement, the edge sealing portions 1131 are fixed after the positive electrode sheet 111, the negative electrode sheet 112, and the separator 113 are stacked or wound to form the electrode assembly 11.

In an embodiment of the present application, as shown in FIG. 5, FIG. 6, FIG. 8, and FIG. 9, the battery cell 10 includes an electrode assembly 11. The electrode assembly 11 includes a positive electrode sheet 111, a negative electrode sheet 112, a separator 113, a positive electrode tab 114, and a negative electrode tab 115. The positive electrode sheet 111 and the negative electrode sheet 112 are alternately stacked and wound, where at least some portions of the separator 113 are provided between the positive electrode sheet 111 and the negative electrode sheet 112. The positive electrode tab 114 and the negative electrode tab 115 are respectively arranged at two opposite ends of the electrode assembly 11 along the first direction Z, where the positive electrode tab 114 is connected to the positive electrode sheet 111, and the negative electrode tab 115 is connected to the negative electrode sheet 112. The separator 113 protrudes beyond two opposite ends of the positive electrode sheet 111 and the negative electrode sheet 112 along the first direction Z to form edge sealing portions 1131, and the edge sealing portions 1131 located beyond each of the ends of the positive electrode sheet 111 and the negative electrode sheet 112 along the first direction Z are fixed through heat sealing.

The above descriptions are merely optional embodiments of the present application and are not intended to limit the present application. For those skilled in the art, various modifications and changes can be made to the present application. Any modification, equivalent replacement, improvement, and the like made within the spirit and principles of the present application should be included in the scope of the claims of the present application.

## Claims

1. A battery cell (10), comprising an electrode assembly (11), wherein the electrode assembly (11) comprises a positive electrode sheet (111), a negative electrode sheet (112), and a separator (113); the positive electrode sheet (111), the negative electrode sheet (112), and the separator (113) are stacked or wound; some portions of the separator (113) protrude beyond an edge of the positive electrode sheet (111) and an edge of the negative electrode sheet (112) to form edge sealing portions (1131); and some of the edge sealing portions (1131) are fixedly connected.

2. The battery cell (10) according to claim 1, wherein the edge sealing portions (1131) located beyond the edges at the same end of the positive electrode sheet (111) and the negative electrode sheet (112) are fixedly connected.

3. The battery cell (10) according to claim 2, wherein the edge sealing portions (1131) located beyond the edges at the same end of the positive electrode sheet (111) and the negative electrode sheet (112) are fixedly connected to form fixed regions (m), and the fixed regions (m) are spaced apart or arranged continuously.

4. The battery cell (10) according to claim 2 or 3, wherein a positive electrode tab (114) and a negative electrode tab (115) are spaced apart at one end of the electrode assembly (11) along a first direction (Z), or a positive electrode tab (114) and a negative electrode tab (115) are respectively arranged at two opposite ends of the electrode assembly (11) along a first direction (Z); the positive electrode tab (114) is connected to the positive electrode sheet (111); the negative electrode tab (115) is connected to the negative electrode sheet (112); and the edge sealing portions (1131) are provided beyond at least one end of the positive electrode sheet (111) and the negative electrode sheet (112) along the first direction (Z).

5. The battery cell (10) according to claim 4, wherein the edge sealing portions (1131) are provided beyond both two opposite ends of the positive electrode sheet (111) and the negative electrode sheet (112) along the first direction (Z), and the edge sealing portions (1131) located beyond each of the ends of the positive electrode sheet (111) and the negative electrode sheet (112) along the first direction (Z) are fixedly connected.

6. The battery cell (10) according to claim 4 or 5, wherein the positive electrode tab (114) and the negative electrode tab (115) are spaced apart at one end of the electrode assembly (11) along the first direction (Z); the edge sealing portions (1131) are provided beyond an end of the positive electrode sheet (111) and an end of the negative electrode sheet (112) having the positive electrode tab (114) and the negative electrode tab (115); and the edge sealing portions (1131) beyond the end of the positive electrode sheet (111) and the end of the negative electrode sheet (112) having the positive electrode tab (114) and the negative electrode tab (115) are fixedly connected and fixed to the positive electrode tab (114) and/or the negative electrode tab (115).

7. The battery cell (10) according to claim 4 or 5, wherein the positive electrode tab (114) and the negative electrode tab (115) are respectively arranged at the two opposite ends of the electrode assembly (11) along the first direction (Z), and the edge sealing portions (1131) are provided beyond both the two opposite ends of the positive electrode sheet (111) and the negative electrode sheet (112) along the first direction (Z); and
the edge sealing portions (1131) beyond the end of the positive electrode sheet (111) and the end of the negative electrode sheet (112) having the positive electrode tab (114) are fixedly connected and fixed to the positive electrode tab (114); and/or the edge sealing portions (1131) beyond the end of the positive electrode sheet (111) and the end of the negative electrode sheet (112) having the negative electrode tab (115) are fixedly connected and fixed to the negative electrode tab (115).

8. The battery cell (10) according to any one of claims 4 to 7, wherein the positive electrode sheet (111), the negative electrode sheet (112), and the separator (113) are stacked along a second direction (Y), and the edge sealing portions (1131) are provided beyond at least one end of the positive electrode sheet (111) and the negative electrode sheet (112) along a third direction (X), wherein the first direction (Z), the second direction (Y) and the third direction (X) intersect with each other.

9. The battery cell (10) according to claim 8, wherein the edge sealing portions (1131) are provided beyond both the two opposite ends of the positive electrode sheet (111) and the negative electrode sheet (112) along the third direction (X), and the edge sealing portions (1131) located beyond each of the ends of the positive electrode sheet (111) and the negative electrode sheet (112) along the third direction (X) are fixedly connected.

10. The battery cell (10) according to any one of claims 1 to 9, wherein the edge sealing portions (1131) are fixed through heat sealing;
or the separator (113) is provided with an adhesive layer at each edge sealing portion (1131), and the edge sealing portions (1131) are fixedly connected through the adhesive layers.

11. A battery (100), comprising the battery cell (10) according to any one of claims 1 to 10.

12. An electric apparatus, comprising the battery cell (10) according to any one of claims 1 to 10, or comprising the battery (100) according to claim 11.

13. A device for processing a battery (2000) applied to the battery cell (10) according to any one of claims 1 to 10, wherein the device for processing a battery (2000) comprises:
an edge sealing apparatus (2100) for fixedly connecting at least some of the edge sealing portions (1131) of the separator (113) protruding beyond an edge of the positive electrode sheet (111) and an edge of the negative electrode sheet (112).

14. The device for processing a battery (2000) according to claim 13, wherein the edge sealing apparatus (2100) comprises:
a connecting member (2110); and
a heating member (2120) provided on the connecting member (2110) and configured to heat the edge sealing portions (1131) to fix the edge sealing portions (1131).

15. The device for processing a battery (2000) according to claim 14, wherein the edge sealing apparatus (2100) comprises one heating member (2120); or the edge sealing apparatus (2100) comprises multiple heating members (2120), wherein the multiple heating members (2120) are spaced apart on one side of the connecting member (2110).

16. The device for processing a battery (2000) according to any one of claims 13 to 15, wherein the device for processing a battery (2000) further comprises:
an assembly apparatus (2200) for assembling the electrode assembly (11) into the battery cell (10); and
a stacking apparatus (2300) for stacking multiple battery cells (10) to form a battery (100).

17. A method for processing a battery (100), applied to the battery cell (10) according to any one of claims 1 to 10, wherein the method for processing a battery (100) comprises:
fixedly connecting at least some of the edge sealing portions (1131) of the separator (113) protruding beyond an edge of the positive electrode sheet (111) and an edge of the negative electrode sheet (112).

18. The method for processing a battery (100) according to claim 17, wherein the fixedly connecting at least some of the edge sealing portions (1131) of the separator (113) protruding beyond an edge of the positive electrode sheet (111) and an edge of the negative electrode sheet (112) comprises:
fixedly connecting the edge sealing portions (1131) of the separator (113) located beyond the edges at the same end of the positive electrode sheet (111) and the negative electrode sheet (112).

19. The method for processing a battery (100) according to claim 18, wherein the fixedly connecting the edge sealing portions (1131) of the separator (113) located beyond the edges at the same end of the positive electrode sheet (111) and the negative electrode sheet (112) comprises:
pressing an edge sealing apparatus (2100) onto the edge sealing portions (1131) of the separator (113) protruding beyond the edges at the same end of the positive electrode sheet (111) and the negative electrode sheet (112); and
heating the edge sealing portions (1131) by the edge sealing apparatus (2100).

20. The method for processing a battery (100) according to any one of claims 17 to 19, wherein before the fixedly connecting at least some of the edge sealing portions (1131) of the separator (113) protruding beyond an edge of the positive electrode sheet (111) and an edge of the negative electrode sheet (112), the method comprises:
stacking or winding the positive electrode sheet (111), the negative electrode sheet (112), and the separator (113).
